# EUROPEAN PATENT APPLICATION

(11) **EP 4 645 995 A1**
(43) Date of publication of application: **05.11.2025**
(21) Application number: 24741134.1
(22) Date of filing: 03.01.2024
(51) Int. Cl.: H04W 72/231, H04W 4/70, H04W 4/46

(54) **DATA TRANSMISSION METHOD AND COMMUNICATION APPARATUS**

(30) Priority: 14.01.2023 CN 202310202757; 16.03.2023 CN 202310281237
(71) Applicant: Huawei Technologies Co., Ltd., Shenzhen, Guangdong 518129 (CN)
(72) Inventor: WANG, Bichai, Shenzhen, Guangdong 518129 (CN); LI, Xueru, Shenzhen, Guangdong 518129 (CN)
(74) Representative: Gill Jennings & Every LLP
(86) International application number: PCT/CN2024/070337
(87) International publication number: WO 2024/149135

(57) **Abstract**

Embodiments of this application provide a data transmission method and a communication apparatus. According to this application, a first terminal device sends a first TB to a second terminal device on a first resource through a sidelink, and sends a second TB to a network device on a second resource through an uplink, where both the first TB and the second TB correspond to a first RLC PDU set. Therefore, after receiving a HARQ feedback for the first TB from the second terminal device, the first terminal device or the network device may determine, based on the HARQ feedback, whether the network device sends an RLC PDU in the first RLC PDU set to the second terminal device. For example, if the HARQ feedback of the second terminal device for the first TB indicates that the second terminal device correctly receives the first TB, the first terminal device or the network device determines that the network device does not send the RLC PDU in the first RLC PDU set to the second terminal device, thereby reducing resource consumption.

## Description

This application claims priority to Chinese Patent Application No. 202310202757.8, filed with the China National Intellectual Property Administration on January 14, 2023 and entitled "COMMUNICATION METHOD AND DEVICE", which is incorporated herein by reference in its entirety.

This application claims priority to Chinese Patent Application No. 202310281237.0, filed with the China National Intellectual Property Administration on March 16, 2023 and entitled "DATA TRANSMISSION METHOD AND COMMUNICATION APPARATUS", which is incorporated herein by reference in its entirety.

### TECHNICAL FIELD

Embodiments of this application relate to the communication field, and more specifically, to a data transmission method and a communication apparatus.

### BACKGROUND

In applications such as the industrial internet, an ultra-reliable low-latency communication (ultra-reliable low-latency communication, URLLC) service has extremely high requirements on a latency and reliability. On the one hand, a latency can be reduced through sidelink (sidelink, SL) direct communication. On the other hand, because a device, for example, a mobile robot, exists in a factory environment, an SL channel may be temporarily blocked, and consequently, it may be difficult to meet a strict reliability requirement only through an SL (a proximity-based services communication 5 (proximity-based services communication 5, PC5) interface).

To ensure service transmission reliability, a packet data convergence protocol (packet data convergence protocol, PDCP) duplication transmission method is provided. When a transmitting user equipment (user equipment, UE) (transmitting UE, TX UE) and a receiving UE (receiving UE, RX UE) each have a Uu protocol stack and a PC5 protocol stack, and both the TX UE and the RX UE are within coverage of a network device, a path diversity gain can be provided between the TX UE and the RX UE through Uu (where U represents a user to network interface (user to network interface), and u represents universal (universal)) and PC5 redundant transmission, to avoid a case in which reliable transmission cannot be implemented when quality of an SL channel deteriorates (for example, the SL channel is blocked).

In a rapidly changing environment, if reliable transmission is implemented always through PDCP duplication, a large quantity of resources may be wasted, that is, regardless of whether transmission of data between a TX UE and an RX UE is correctly performed through an SL, a network device forwards the data to the RX UE, resulting in high resource overheads.

### SUMMARY

Embodiments of this application provide a data transmission method and a communication apparatus, to avoid a waste of resources while ensuring transmission reliability.

According to a first aspect, a data transmission method is provided. The method may be performed by a terminal device, or may be performed by a component (for example, a chip or a circuit) of the terminal device. This is not limited. For ease of description, an example in which the method is performed by a first terminal device is used below for description.

The method includes: The first terminal device sends a first transport block (transport block, TB) to a second terminal device on a first resource through a sidelink, where the first TB corresponds to a first radio link control (radio link control, RLC) protocol data unit (protocol data unit, PDU) set; and the first terminal device sends a second TB to a network device on a second resource through an uplink; or when a first condition is met, the first terminal device sends a second TB to a network device on a second resource through an uplink, where the second TB corresponds to the first RLC PDU set.

According to the foregoing technical solution, the first TB sent by the first terminal device to the second terminal device and the second TB sent by the first terminal device to the network device correspond to the same first RLC PDU set. Therefore, after receiving a hybrid automatic repeat request (hybrid automatic repeat request, HARQ) feedback of the second terminal device for the first TB, the first terminal device or the network device may use the HARQ feedback of the second terminal device for the first TB as a feedback for a receiving status of an RLC PDU of the first RLC PDU set. In this case, this helps the first terminal device or the network device determine, based on the HARQ feedback of the second terminal device for the first TB, whether the network device sends the RLC PDU in the first RLC PDU set to the second terminal device. For example, if the HARQ feedback of the second terminal device for the first TB indicates that the second terminal device correctly receives the first TB, the first terminal device or the network device determines that the network device does not send the RLC PDU in the first RLC PDU set to the second terminal device, thereby reducing resource consumption.

For example, the first RLC PDU set includes at least one PC5 RLC PDU. The PC5 RLC PDU indicates an RLC PDU corresponding to a PC5 protocol stack, or may have another name, for example, an RLC PDU of the PC5 protocol stack.

With reference to the first aspect, in some implementations of the first aspect, the first terminal device sends the at least one PC5 RLC PDU to a Uu medium access control (medium access control, MAC) entity and a PC5 MAC entity through a PC5 RLC entity; the first terminal device generates the first TB based on the at least one PC5 RLC PDU through the PC5 MAC entity; and the first terminal device generates the second TB based on the at least one PC5 RLC PDU through the Uu MAC entity.

The PC5 RLC entity indicates an RLC entity of the PC5 protocol stack, the Uu MAC entity indicates a MAC entity of a Uu protocol stack, and the PC5 MAC entity indicates a MAC entity of the PC5 protocol stack.

According to the foregoing technical solution, the PC5 RLC entity of the first terminal device is connected to the Uu MAC entity and the PC5 MAC entity, so that the Uu MAC entity and the PC5 MAC entity may reuse the RLC PDU included in the first RLC PDU set to respectively generate the second TB and the first TB.

With reference to the first aspect, in some implementations of the first aspect, the first resource and a first logical channel set have a mapping relationship, the second resource and a second logical channel set have a mapping relationship, and the first logical channel set is associated with the second logical channel set.

According to the foregoing technical solution, when the first logical channel set is associated with the second logical channel set, the first terminal device may perform transmission of a same RLC PDU through the first logical channel set and the second logical channel set. For example, the first terminal device performs transmission of the RLC PDU in the first RLC PDU set through the first logical channel set and the second logical channel set.

For example, that the first logical channel set is associated with the second logical channel set includes: a logical channel identifier (logic channel identity, LCID) included in the first logical channel set is the same as an LCID included in the second logical channel set. For example, LCIDs included in the first logical channel set are {1, 2}, and LCIDs included in the second logical channel set are {1, 2}. The LCID included in the logical channel set may also be referred to as an LCID corresponding to a logical channel included in the logical channel set.

For example, that the first logical channel set is associated with the second logical channel set includes: an LCID included in the first logical channel set and an LCID included in the second logical channel set have a mapping relationship. For example, LCIDs included in the first logical channel set are {1, 2}, and LCIDs included in the second logical channel set are {3, 4}, where the LCID 1 is associated with the LCID 3, and the LCID 2 is associated with the LCID 4.

With reference to the first aspect, in some implementations of the first aspect, the method further includes: The first terminal device receives first feedback information from the second terminal device, where the first feedback information indicates at least one of the following: a receiving status of the first TB, quality information of a channel between the first terminal device and the second terminal device, or whether the first terminal device sends the second TB to the network device.

According to the foregoing technical solution, after receiving the first feedback information from the second terminal device, the first terminal device may determine, based on the first feedback information, whether the second terminal device correctly receives the first TB, so that when determining that the second terminal device does not correctly receive the first TB, the first terminal device sends the second TB and/or first indication information to the network device. In this way, the network device sends, to the second terminal device, the RLC PDU in the first RLC PDU set corresponding to the second TB. This helps reduce resource consumption while ensuring transmission reliability of the RLC PDU included in the first RLC PDU set.

With reference to the first aspect, in some implementations of the first aspect, the first condition includes at least one of the following: The first terminal device does not correctly receive the first feedback information; the first feedback information indicates that the second terminal device does not correctly receive the first TB; the first feedback information indicates that quality of the channel between the first terminal device and the second terminal device is lower than a first threshold; or the first feedback information indicates the first terminal device to send the second TB to the network device.

According to the foregoing technical solution, that the first terminal device sends the second TB to the network device when the first condition is met is equivalent to that the second terminal device sends the second TB to the network device when the second terminal device does not correctly receive the first TB. This helps reduce resource consumption.

With reference to the first aspect, in some implementations of the first aspect, the first terminal device sends the first indication information to the network device based on the first feedback information, where the first indication information indicates whether the network device sends an RLC PDU included in the first RLC PDU set to the second terminal device.

According to the foregoing technical solution, the network device may determine, based on the first indication information, whether to send the RLC PDU included in the first RLC PDU set to the second terminal device, instead of always sending the RLC PDU included in the first RLC PDU set to the second terminal device when the second TB is received. This helps reduce resource consumption while ensuring transmission reliability.

With reference to the first aspect, in some implementations of the first aspect, the method further includes: The first terminal device receives second indication information from the network device, where the second indication information indicates at least one of the following: time-domain resource position information and/or frequency-domain resource position information of the first resource; a mapping relationship between the first resource and a logical channel; time-domain resource position information and/or frequency-domain resource position information of the second resource; a mapping relationship between the second resource and a logical channel; or time-domain resource position information and/or frequency-domain resource position information of a third resource, where the third resource is a resource used by the second terminal device to send second feedback information to the network device, and the second feedback information indicates at least one of the following: a receiving status of the first TB, quality information of a channel between the first terminal device and the second terminal device, or whether the network device sends an RLC PDU included in the first RLC PDU set to the second terminal device.

With reference to the first aspect, in some implementations of the first aspect, the method further includes: The first terminal device sends fifth indication information to the second terminal device, where the fifth indication information indicates at least one of the following: the time-domain resource position information and/or the frequency-domain resource position information of the first resource; the mapping relationship between the first resource and the logical channel; the time-domain resource position information and/or the frequency-domain resource position information of the second resource; the mapping relationship between the second resource and the logical channel; or the time-domain resource position information and/or the frequency-domain resource position information of the third resource.

With reference to the first aspect, in some implementations of the first aspect, the method further includes: The first terminal device sends third indication information to the network device, where the third indication information indicates at least one of the following: time-domain resource position information and/or frequency-domain resource position information of the first resource; a mapping relationship between the first resource and a logical channel; requesting the network device to schedule the second resource and/or a third resource, where the third resource is a resource used by the second terminal device to send second feedback information to the network device, and the second feedback information indicates at least one of the following: a receiving status of the first TB, quality information of a channel between the first terminal device and the second terminal device, or whether the network device sends an RLC PDU included in the first RLC PDU set to the second terminal device.

According to a second aspect, a data transmission method is provided. The method may be performed by a network device, or may be performed by a component (for example, a chip or a circuit) of the network device. This is not limited. For ease of description, an example in which the method is performed by a network device is used below for description.

The method includes: The network device receives a second TB from a first terminal device on a second resource through an uplink, where both the second TB and a first TB correspond to a first RLC PDU set, and the first TB is a TB sent by the first terminal device to a second terminal device on a first resource through a sidelink; the network device receives first information, where the first information includes second feedback information from the second terminal device and/or first indication information from the first terminal device; the second feedback information indicates at least one of the following: a receiving status of the first TB, quality information of a channel between the first terminal device and the second terminal device, or whether the network device sends an RLC PDU included in the first RLC PDU set to the second terminal device; and the first indication information indicates whether the network device sends an RLC PDU included in the first RLC PDU set to the second terminal device; and the network device determines, based on the first information, whether to send an RLC PDU included in the first RLC PDU set to the second terminal device.

According to the foregoing technical solution, the network device may determine, based on the first information, whether to send the RLC PDU included in the first RLC PDU set to the second terminal device. In comparison with a manner in which the network device directly sends the RLC PDU in the first RLC PDU set to the second terminal device, the method provided in this application helps reduce resource consumption while ensuring transmission reliability. For example, if the second feedback information indicates that the second terminal device correctly receives the first TB, the network device does not send the RLC PDU in the first RLC PDU set to the second terminal device, thereby reducing resource consumption.

With reference to the second aspect, in some implementations of the second aspect, the first resource and a first logical channel set have a mapping relationship, the second resource and a second logical channel set have a mapping relationship, and the first logical channel set is associated with the second logical channel set.

According to the foregoing technical solution, when the first logical channel set is associated with the second logical channel set, the first terminal device may perform transmission of a same RLC PDU through the first logical channel set and the second logical channel set. For example, the first terminal device performs transmission of the RLC PDU in the first RLC PDU set through the first logical channel set and the second logical channel set.

For example, that the first logical channel set is associated with the second logical channel set includes: an LCID included in the first logical channel set is the same as an LCID included in the second logical channel set; or an LCID included in the first logical channel set and an LCID included in the second logical channel set have a mapping relationship.

With reference to the second aspect, in some implementations of the second aspect, that the network device determines, based on the first information, whether to send the RLC PDU included in the first RLC PDU set to the second terminal device includes: The network device sends, when a second condition is met, the RLC PDU included in the first RLC PDU set to the second terminal device, where the second condition includes at least one of the following: the first information includes the second feedback information, and the second feedback information indicates that the second terminal device does not correctly receive the first TB; the first information includes the second feedback information, and the second feedback information indicates that quality of the channel between the first terminal device and the second terminal device is lower than a first threshold; the first information includes the second feedback information, and the second feedback information indicates the network device to send an RLC PDU included in the first RLC PDU set to the second terminal device; and the first information includes the first indication information, and the first indication information indicates the network device to send an RLC PDU included in the first RLC PDU set to the second terminal device.

According to the foregoing technical solution, when the second terminal device does not correctly receive the first TB, the network device can send the RLC PDU included in the first RLC PDU set to the second terminal device; or when the second terminal device correctly receives the first TB, the network device does not send the RLC PDU included in the first RLC PDU set to the second terminal device. This helps reduce resource consumption while ensuring reliable transmission.

With reference to the second aspect, in some implementations of the second aspect, that the network device sends the RLC PDU included in the first RLC PDU set to the second terminal device includes: The network device sends, when the second condition and a third condition are met, an RLC PDU included in the first RLC PDU set to the second terminal device, where the third condition is that at least one time-domain unit included in a first time-domain resource is before all time-domain units included in a second time-domain resource, the first time-domain resource is used by the network device to send an RLC PDU included in the first RLC PDU set to the second terminal device, and the second time-domain resource is used by the first terminal device to retransmit an RLC PDU included in the first RLC PDU set.

According to the foregoing technical solution, when the third condition is met, the network device sends a third TB to the second terminal device, so that the second terminal device can receive the RLC PDU in the first RLC PDU set as early as possible. Therefore, a data transmission latency can be reduced.

With reference to the second aspect, in some implementations of the second aspect, the method further includes: The network device sends second indication information to the first terminal device, where the second indication information indicates at least one of the following: time-domain resource position information and/or frequency-domain resource position information of the first resource; a mapping relationship between the first resource and a logical channel; time-domain resource position information and/or frequency-domain resource position information of the second resource; a mapping relationship between the second resource and a logical channel; or time-domain resource position information and/or frequency-domain resource position information of a third resource, where the third resource is a resource used by the second terminal device to send the second feedback information to the network device.

With reference to the second aspect, in some implementations of the second aspect, the method further includes: The network device receives third indication information from the first terminal device, where the third indication information indicates at least one of the following: time-domain resource position information and/or frequency-domain resource position information of the first resource; a mapping relationship between the first resource and a logical channel; or requesting the network device to schedule the second resource and/or a third resource, where the third resource is a resource used by the second terminal device to send the second feedback information to the network device; and the network device sends fourth indication information to the first terminal device based on the third indication information, where the fourth indication information indicates at least one of the following: time-domain resource position information and/or frequency-domain resource position information of the second resource; a mapping relationship between the first resource and a logical channel; or time-domain resource position information and/or frequency-domain resource position information of the third resource.

With reference to the second aspect, in some implementations of the second aspect, the method further includes: The network device sends fifth indication information to the second terminal device, where the fifth indication information indicates at least one of the following: time-domain resource position information and/or frequency-domain resource position information of the first resource; a mapping relationship between the first resource and a logical channel; time-domain resource position information and/or frequency-domain resource position information of the second resource; a mapping relationship between the second resource and a logical channel; or time-domain resource position information and/or frequency-domain resource position information of the third resource, where the third resource is a resource used by the second terminal device to send the second feedback information to the network device.

According to a third aspect, a data transmission method is provided. The method may be performed by a terminal device, or may be performed by a component (for example, a chip or a circuit) of the terminal device. This is not limited. For ease of description, an example in which the method is performed by a second terminal device is used below for description.

The method includes: The second terminal device receives a first TB from a first terminal device on a first resource through a sidelink, where both the first TB and a second TB correspond to a first RLC PDU set, and the second TB is a TB that is received by a network device from the first terminal device on a second resource through an uplink; and the second terminal device sends first feedback information to the first terminal device, and/or the second terminal device sends second feedback information to the network device on a third resource, where the first feedback information indicates at least one of the following: a receiving status of the first TB, quality information of a channel between the first terminal device and the second terminal device, or whether the first terminal device sends the second TB to the network device; and the second feedback information indicates at least one of the following: a receiving status of the first TB, quality information of a channel between the first terminal device and the second terminal device, or whether the network device sends an RLC PDU included in the first RLC PDU set to the second terminal device.

According to the foregoing technical solution, the first TB sent by the first terminal device to the second terminal device and the second TB sent by the first terminal device to the network device correspond to the same first RLC PDU set. Therefore, after the second terminal device sends the feedback information to the first terminal device and/or the network device, the first terminal device and/or the network device may determine whether the second terminal device correctly receives the RLC PDU in the first RLC PDU set. This helps the first terminal device and/or the network device determine whether the network device sends the RLC PDU in the first RLC PDU set to the second terminal device. For example, if the first terminal device and/or the network device determine/determines that the second terminal device correctly receives the RLC PDU in the first RLC PDU set, the first terminal device and/or the network device determine/determines that the network device does not send the RLC PDU in the first RLC PDU set to the second terminal device, thereby reducing resource consumption.

With reference to the third aspect, in some implementations of the third aspect, the second terminal device receives a third TB from the network device, where the third TB corresponds to the first RLC PDU set.

With reference to the third aspect, in some implementations of the third aspect, the method further includes: The second terminal device sends the RLC PDU included in the first RLC PDU set to a PC5 RLC entity through a Uu MAC entity.

With reference to the third aspect, in some implementations of the third aspect, the first resource and a first logical channel set have a mapping relationship, the second resource and a second logical channel set have a mapping relationship, and the first logical channel set is associated with the second logical channel set.

According to the foregoing technical solution, when the first logical channel set is associated with the second logical channel set, the first terminal device may perform transmission of a same RLC PDU through the first logical channel set and the second logical channel set. For example, the first terminal device performs transmission of the RLC PDU in the first RLC PDU set through the first logical channel set and the second logical channel set.

For example, that the first logical channel set is associated with the second logical channel set includes: an LCID included in the first logical channel set is the same as an LCID included in the second logical channel set; or an LCID included in the first logical channel set and an LCID included in the second logical channel set have a mapping relationship.

With reference to the third aspect, in some implementations of the third aspect, the method further includes: The second terminal device receives fifth indication information from the network device or the first terminal device, where the fifth indication information indicates at least one of the following: time-domain resource position information and/or frequency-domain resource position information of the first resource; a mapping relationship between the first resource and a logical channel; the time-domain resource position information and/or the frequency-domain resource position information of the second resource; a mapping relationship between the second resource and a logical channel; or time-domain resource position information and/or frequency-domain resource position information of the third resource.

According to a fourth aspect, a data transmission method is provided. The method may be performed by a terminal device, or may be performed by a component (for example, a chip or a circuit) of the terminal device. This is not limited. For ease of description, an example in which the method is performed by a first terminal device is used below for description.

The method includes: The first terminal device sends a radio network temporary identifier (radio network temporary identifier, RNTI) to a second terminal device, where the RNTI corresponds to the first terminal device, or the RNTI corresponds to the first terminal device and the second terminal device; and the first terminal device sends a fourth TB to a network device and the second terminal device on a fourth resource, where the RNTI is used by the network device and the second terminal device to decode the fourth TB.

According to the foregoing technical solution, the first terminal device and/or the network device send/sends, to the second terminal device, the RNTI corresponding to the first terminal device or the RNTI corresponding to the first terminal device and the second terminal device. Therefore, after the first terminal device sends the fourth TB to the network device and the second terminal device on the fourth resource, the second terminal device and the network device may decode the fourth TB based on the received RNTI, so that the first terminal device can send a same TB to both the second terminal device and the network device.

When the first terminal device sends the same fourth TB to the second terminal device and the network device, this helps the first terminal device and/or the network device determine, based on a HARQ feedback of the second terminal device for the fourth TB, whether the network device sends an RLC PDU included in the fourth TB to the second terminal device. For example, if the HARQ feedback of the second terminal device for the fourth TB indicates that the second terminal device correctly receives the fourth TB, the first terminal device and/or the network device determine/determines that the network device does not send the RLC PDU included in the fourth TB to the second terminal device, thereby reducing resource consumption.

With reference to the fourth aspect, in some implementations of the fourth aspect, the RNTI corresponds to the first terminal device and the second terminal device, and the method further includes: The first terminal device receives the RNTI from the network device.

With reference to the fourth aspect, in some implementations of the fourth aspect, the method further includes: The first terminal device receives third feedback information from the second terminal device, where the third feedback information indicates one or more of the following: a receiving status of the fourth TB or quality information of a channel between the first terminal device and the second terminal device; and the first terminal device sends sixth indication information to the network device based on the third feedback information, where the sixth indication information indicates whether the network device sends the RLC PDU included in the fourth TB to the second terminal device.

According to the foregoing technical solution, after receiving the third feedback information from the second terminal device, the first terminal device may send the sixth indication information to the network device based on the third feedback information, to indicate the network device to send the RLC PDU included in the fourth TB to the terminal device, or indicate the network device not to send the RLC PDU included in the fourth TB to the terminal device. In comparison with a manner in which the network device directly sends the RLC PDU included in the fourth TB to the second terminal device, the method provided in this application helps reduce resource consumption while ensuring transmission reliability.

With reference to the fourth aspect, in some implementations of the fourth aspect, that the first terminal device sends sixth indication information to the network device based on the third feedback information includes: When a fourth condition is met, the first terminal device sends the sixth indication information to the network device, where the sixth indication information indicates the network device to send the RLC PDU included in the fourth TB to the second terminal device, and the fourth condition includes at least one of the following: The third feedback information indicates that the second terminal device does not correctly receive the fourth TB; or the third feedback information indicates that quality of the channel between the first terminal device and the second terminal device is lower than a first threshold.

According to the foregoing technical solution, when the second terminal device does not correctly receive the fourth TB, the network device can send the RLC PDU included in the fourth TB to the second terminal device; or when the second terminal device correctly receives the fourth TB, the network device does not send the RLC PDU included in the fourth TB to the second terminal device. This helps reduce resource consumption while ensuring reliable transmission.

With reference to the fourth aspect, in some implementations of the fourth aspect, the method further includes: The first terminal device receives seventh indication information from the network device, where the seventh indication information indicates at least one of the following: time-domain resource position information and/or frequency-domain resource position information of the fourth resource; time-domain resource position information and/or frequency-domain resource position information of a fifth resource, where the fifth resource is a resource used by the second terminal device to send fourth feedback information to the network device, and the fourth feedback information indicates at least one of the following: the receiving status of the fourth TB, the quality information of the channel between the first terminal device and the second terminal device, or whether the network device sends an RLC PDU included in the fourth TB to the second terminal device; or time-domain resource position information and/or frequency-domain resource position information of a sixth resource, where the sixth resource is used by the first terminal device to send the sixth indication information.

With reference to the fourth aspect, in some implementations of the fourth aspect, the method further includes: The first terminal device sends ninth indication information to the second terminal device, where the ninth indication information indicates at least one of the following: the time-domain resource position information and/or the frequency-domain resource position information of the fourth resource; or the time-domain resource position information and/or the frequency-domain resource position information of the fifth resource.

With reference to the fourth aspect, in some implementations of the fourth aspect, the method further includes: The first terminal device receives eighth indication information from the network device, where the eighth indication information indicates at least one of the following: The first terminal device sends the fourth TB to the network device and the second terminal device on the fourth resource; or the second terminal device receives the fourth TB from the first terminal device on the fourth resource.

With reference to the fourth aspect, in some implementations of the fourth aspect, the method further includes: The first terminal device sends tenth indication information to the second terminal device, where the tenth indication information indicates at least one of the following: The first terminal device sends the fourth TB to the network device and the second terminal device on the fourth resource; or the second terminal device receives the fourth TB from the first terminal device on the fourth resource.

With reference to the fourth aspect, in some implementations of the fourth aspect, that the first terminal device sends the fourth TB to the network device and the second terminal device on the fourth resource includes: The first terminal device sends the fourth TB to the network device and the second terminal device on the fourth resource through a Uu protocol stack.

According to a fifth aspect, a data transmission method is provided. The method may be performed by a network device, or may be performed by a component (for example, a chip or a circuit) of the network device. This is not limited. For ease of description, an example in which the method is performed by a network device is used below for description.

The method includes: The network device sends, to a first terminal device, an RNTI corresponding to the first terminal device and a second terminal device; and the network device receives a fourth TB from the first terminal device on a fourth resource, where the fourth resource is further used by the first terminal device to send the fourth TB to the second terminal device, and the RNTI is used by the network device and the second terminal device to decode the fourth TB.

According to the foregoing technical solution, the network device sends, to the first terminal device, the RNTI corresponding to the first terminal device and the second terminal device, so that the first terminal device may scramble the fourth TB based on the RNTI. After the first terminal device sends the fourth TB to the network device and the second terminal device on the fourth resource, the second terminal device and the network device may decode the fourth TB based on the received RNTI, so that the first terminal device can send a same TB to both the second terminal device and the network device.

With reference to the fifth aspect, in some implementations of the fifth aspect, the method further includes: The network device sends the RNTI to the second terminal device.

With reference to the fifth aspect, in some implementations of the fifth aspect, the method further includes: The network device receives second information, where the second information includes fourth feedback information from the second terminal device or sixth indication information from the first terminal device, and the fourth feedback information indicates at least one of the following: a receiving status of the fourth TB, quality information of a channel between the first terminal device and the second terminal device, or whether the network device sends an RLC PDU included in the fourth TB to the second terminal device; and the sixth indication information indicates whether the network device sends the RLC PDU included in the fourth TB to the second terminal device; and the network device determines, based on the second information, whether to send the RLC PDU included in the fourth TB to the second terminal device.

According to the foregoing technical solution, the network device may determine, based on the second information, whether to send the RLC PDU included in the fourth TB to the second terminal device. In comparison with a manner in which the network device directly sends the RLC PDU included in the fourth TB to the second terminal device, the method provided in this application helps reduce resource consumption while ensuring transmission reliability. For example, if the fourth feedback information indicates that the second terminal device correctly receives the fourth TB, the network device does not send the RLC PDU included in the fourth TB to the second terminal device, thereby reducing resource consumption.

With reference to the fifth aspect, in some implementations of the fifth aspect, that the network device determines, based on the second information, whether to send the RLC PDU included in the fourth TB to the second terminal device includes: The network device sends the RLC PDU included in the fourth TB to the second terminal device when a fifth condition is met, where the fifth condition includes at least one of the following: the second information includes the fourth feedback information, and the fourth feedback information indicates that the second terminal device does not correctly receive the fourth TB; the second information includes the fourth feedback information, and the fourth feedback information indicates that quality of the channel between the first terminal device and the second terminal device is lower than a first threshold; the second information includes the fourth feedback information, and the fourth feedback information indicates the network device to send the RLC PDU included in the fourth TB to the second terminal device; and the second information includes the sixth indication information, and the sixth indication information indicates the network device to send the RLC PDU included in the fourth TB to the second terminal device.

According to the foregoing technical solution, when the second terminal device does not correctly receive the fourth TB, the network device can send the RLC PDU included in the fourth TB to the second terminal device; or when the second terminal device correctly receives the fourth TB, the network device does not send the RLC PDU included in the fourth TB to the second terminal device. This helps reduce resource consumption while ensuring reliable transmission.

With reference to the fifth aspect, in some implementations of the fifth aspect, that the network device sends the RLC PDU included in the fourth TB to the second terminal device when a fifth condition is met includes: The network device sends the RLC PDU included in the fourth TB to the second terminal device when the fifth condition and a sixth condition are met, where the sixth condition is that at least one time-domain unit included in a third time-domain resource is before all time-domain units included in a fourth time-domain resource, where the third time-domain resource is used by the network device to send an RLC PDU included in the fourth TB to the second network device, and the fourth time-domain resource is used by the first terminal device to retransmit an RLC PDU included in the fourth TB to the second terminal device.

According to the foregoing technical solution, when the sixth condition is met, the network device sends the RLC PDU included in the fourth TB to the second terminal device, so that the second terminal device can receive the RLC PDU included in the fourth TB as early as possible. Therefore, a data transmission latency can be reduced.

With reference to the fifth aspect, in some implementations of the fifth aspect, the method further includes: The network device sends seventh indication information to the first terminal device, where the seventh indication information indicates at least one of the following: time-domain resource position information and/or frequency-domain resource position information of the fourth resource; time-domain resource position information and/or frequency-domain resource position information of a fifth resource, where the fifth resource is a resource used by the second terminal device to send the fourth feedback information to the network device; or time-domain resource position information and/or frequency-domain resource position information of a sixth resource, where the sixth resource is a resource used by the first terminal device to send the sixth indication information to the network device.

With reference to the fifth aspect, in some implementations of the fifth aspect, the method further includes: The network device sends eighth indication information to the first terminal device, where the eighth indication information indicates at least one of the following: The first terminal device sends the fourth TB to the network device and the second terminal device on the fourth resource; or the second terminal device receives the fourth TB from the first terminal device on the fourth resource.

With reference to the fifth aspect, in some implementations of the fifth aspect, the method further includes: The network device sends ninth indication information to the second terminal device, where the ninth indication information indicates at least one of the following: the time-domain resource position information and/or the frequency-domain resource position information of the fourth resource; or the time-domain resource position information and/or the frequency-domain resource position information of the fifth resource, where the fifth resource is the resource used by the second terminal device to send the fourth feedback information to the network device.

With reference to the fifth aspect, in some implementations of the fifth aspect, the method further includes: The network device sends tenth indication information to the second terminal device, where the tenth indication information indicates at least one of the following: The first terminal device sends the fourth TB to the network device and the second terminal device on the fourth resource; or the second terminal device receives the fourth TB from the first terminal device on the fourth resource.

According to a sixth aspect, a data transmission method is provided. The method may be performed by a terminal device, or may be performed by a component (for example, a chip or a circuit) of the terminal device. This is not limited. For ease of description, an example in which the method is performed by a second terminal device is used below for description.

The method includes: The second terminal device receives an RNTI from a network device or a first terminal device, where the RNTI corresponds to the first terminal device, or the RNTI corresponds to the first terminal device and the second terminal device; and the second terminal device receives a fourth TB from the first terminal device on a fourth resource, where the fourth resource is further used by the first terminal device to send the fourth TB to the network device, and the RNTI is used by the network device and the second terminal device to decode the fourth TB.

According to the foregoing technical solution, the first terminal device and/or the network device send/sends, to the second terminal device, the RNTI corresponding to the first terminal device or the RNTI corresponding to the first terminal device and the second terminal device. Therefore, after the first terminal device sends the fourth TB to the network device and the second terminal device on the fourth resource, the second terminal device and the network device may decode the fourth TB based on the received RNTI, so that the first terminal device can send a same TB to both the second terminal device and the network device.

With reference to the sixth aspect, in some implementations of the sixth aspect, the method further includes: The second terminal device receives ninth indication information from the network device or the first terminal device, where the ninth indication information indicates time-domain resource position information and/or frequency-domain resource position information of the fourth resource, and the fourth resource is used by the second terminal device to send uplink data to the network device; the second terminal device receives tenth indication information from the network device or the first terminal device, where the tenth indication information indicates at least one of the following: the first terminal device sends the fourth TB to the network device and the second terminal device on the fourth resource; or the second terminal device receives the fourth TB from the first terminal device on the fourth resource; and that the second terminal device receives a fourth transport block TB from the first terminal device on a fourth resource includes: The second terminal device receives the fourth TB from the first terminal device on the fourth resource based on the tenth indication information.

With reference to the sixth aspect, in some implementations of the sixth aspect, the method further includes: The second terminal device sends third feedback information to the first terminal device, where the third feedback information indicates one or more of the following: a receiving status of the fourth TB, or quality information of a channel between the first terminal device and the second terminal device.

According to the foregoing technical solution, the first terminal device may indicate, based on the third feedback information, the network device whether to send an RLC PDU included in the fourth TB to the second terminal device. In comparison with a manner in which the network device directly sends the RLC PDU included in the fourth TB to the second terminal device, the method provided in this application helps reduce resource consumption while ensuring transmission reliability. For example, if the third feedback information indicates that the second terminal device correctly receives the fourth TB, the first terminal device indicates the network device not to send the RLC PDU included in the fourth TB to the second terminal device, thereby reducing resource consumption.

With reference to the sixth aspect, in some implementations of the sixth aspect, the ninth indication information further indicates time-domain resource position information and/or frequency-domain resource position information of a fifth resource, and the method further includes: The second terminal device sends fourth feedback information to the network device on the fifth resource, where the fourth feedback information indicates at least one of the following: the receiving status of the fourth TB, the quality information of the channel between the first terminal device and the second terminal device, or whether the network device sends an RLC PDU included in the fourth TB to the second terminal device.

According to the foregoing technical solution, the network device may indicate, based on the fourth feedback information, the network device whether to send the RLC PDU included in the fourth TB to the second terminal device. In comparison with a manner in which the network device directly sends the RLC PDU included in the fourth TB to the second terminal device, the method provided in this application helps reduce resource consumption while ensuring transmission reliability. For example, if the fourth feedback information indicates that the second terminal device correctly receives the fourth TB, the network device does not send the RLC PDU included in the fourth TB to the second terminal device, thereby reducing resource consumption.

According to a seventh aspect, a communication apparatus is provided. The apparatus includes a PC5 RLC entity, a Uu MAC entity, and a PC5 MAC entity, where the PC5 RLC entity is configured to send at least one PC5 RLC PDU to the Uu MAC entity and the PC5 MAC entity; the PC5 MAC entity is configured to generate a first TB based on the at least one PC5 RLC PDU; and the Uu MAC entity is configured to generate a second TB based on the at least one PC5 RLC PDU.

With reference to the seventh aspect, in some implementations of the seventh aspect, the communication apparatus further includes one or more of the following entities: a PC5 service data adaptation protocol (service data adaptation protocol, SDAP) entity, a PC5 packet data convergence protocol (packet data convergence protocol, PDCP) entity, a PC5 physical layer (physical, PHY) entity, a Uu SDAP entity, a Uu PDCP entity, a Uu RLC entity, or a Uu PHY entity.

According to an eighth aspect, a communication apparatus is provided. The apparatus includes a Uu MAC entity and a PC5 RLC entity, where the Uu MAC entity is configured to receive a third TB from a network device, and the third TB corresponds to a first RLC PDU set; and the Uu MAC entity is further configured to send an RLC PDU included in the first RLC PDU set to the PC5 RLC entity.

With reference to the eighth aspect, in some implementations of the eighth aspect, the communication apparatus further includes one or more of the following entities: a PC5 SDAP entity, a PC5 PDCP entity, a PC5 MAC entity, a PC5 PHY entity, a Uu SDAP entity, a Uu PDCP entity, a Uu RLC entity, or a Uu PHY entity.

According to a ninth aspect, a communication apparatus is provided. The apparatus includes a Uu MAC entity, where the Uu MAC entity is configured to send a fourth TB to a network device and a second terminal device.

With reference to the ninth aspect, in some implementations of the ninth aspect, the communication apparatus further includes one or more of the following entities: a PC5 SDAP entity, a PC5 PDCP entity, a PC5 RLC entity, a PC5 MAC entity, a PC5 PHY entity, a Uu SDAP entity, a Uu PDCP entity, a Uu RLC entity, or a Uu PHY entity.

According to a tenth aspect, a communication apparatus is provided. The communication apparatus is configured to perform the method in any one of the possible implementations of the first aspect to the sixth aspect. Specifically, the communication apparatus may include a unit and/or a module configured to perform the method in any one of the first aspect and the possible implementations of the first aspect, may include a unit and/or a module configured to perform the method in any one of the second aspect and the possible implementations of the second aspect, may include a unit and/or a module configured to perform the method in any one of the third aspect and the possible implementations of the third aspect; may include a unit and/or a module configured to perform the method in any one of the fourth aspect and the possible implementations of the fourth aspect, may include a unit and/or a module configured to perform the method in any one of the fifth aspect and the possible implementations of the fifth aspect, or may include a unit and/or a module configured to perform the method in any one of the sixth aspect and the possible implementations of the sixth aspect, for example, a processing unit and/or a communication unit.

In an implementation, the communication apparatus is a device (for example, a terminal device or a network device). When the communication apparatus is the device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a terminal device or a network device). When the communication apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eleventh aspect, a communication apparatus is provided. The communication apparatus includes: at least one processor, configured to execute a computer program or instructions stored in a memory, to perform the method in any one of the first aspect and the possible implementations of the first aspect, to perform the method in any one of the second aspect and the possible implementations of the second aspect, to perform the method in any one of the third aspect and the possible implementations of the third aspect, to perform the method in any one of the fourth aspect and the possible implementations of the fourth aspect, to perform the method in any one of the fifth aspect and the possible implementations of the fifth aspect, or to perform the method in any one of the sixth aspect and the possible implementations of the sixth aspect. Optionally, the communication apparatus further includes the memory, configured to store the computer program or the instructions. Optionally, the communication apparatus further includes a communication interface, and the processor reads, through the communication interface, the computer program or the instructions stored in the memory.

In an implementation, the communication apparatus is a device (for example, a terminal device or a network device).

In another implementation, the communication apparatus is a chip, a chip system, or a circuit used in a device (for example, a terminal device or a network device).

According to a twelfth aspect, this application provides a processor, configured to perform the method provided in the first aspect, configured to perform the method provided in the second aspect, configured to perform the method provided in the third aspect, configured to perform the method provided in the fourth aspect, configured to perform the method provided in the fifth aspect, or configured to perform the method provided in the sixth aspect.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a thirteenth aspect, a computer-readable storage medium is provided. The computer-readable medium stores program code to be executed by a device, and the program code is used to perform the method in any one of the first aspect and the possible implementations of the first aspect, is used to perform the method in any one of the second aspect and the possible implementations of the second aspect, is used to perform the method in any one of the third aspect and the possible implementations of the third aspect, is used to perform the method in any one of the fourth aspect and the possible implementations of the fourth aspect; is used to perform the method in any one of the fifth aspect and the possible implementations of the fifth aspect, or is used to perform the method in any one of the sixth aspect and the possible implementations of the sixth aspect.

According to a fourteenth aspect, a computer program product including instructions is provided. When the computer program product runs on a computer, the computer is enabled to perform the method in any one of the first aspect and the possible implementations of the first aspect, the computer is enabled to perform the method in any one of the second aspect and the possible implementations of the second aspect, the computer is enabled to perform the method in any one of the third aspect and the possible implementations of the third aspect, the computer is enabled to perform the method in any one of the fourth aspect and the possible implementations of the fourth aspect, the computer is enabled to perform the method in any one of the fifth aspect and the possible implementations of the fifth aspect, or the computer is enabled to perform the method in any one of the sixth aspect and the possible implementations of the sixth aspect.

According to a fifteenth aspect, a communication system is provided. The system includes one or more of the following devices: a first terminal device, a second terminal device, or a network device. The first terminal device is configured to perform the method according to any one of the first aspect and the possible implementations of the first aspect, or is configured to perform the method according to any one of the fourth aspect and the possible implementations of the fourth aspect. The network device is configured to perform the method according to any one of the second aspect and the possible implementations of the second aspect, or is configured to perform the method according to any one of the fifth aspect and the possible implementations of the fifth aspect. The second terminal device is configured to perform the method according to any one of the third aspect and the possible implementations of the third aspect, or is configured to perform the method according to any one of the sixth aspect and the possible implementations of the sixth aspect.

### BRIEF DESCRIPTION OF DRAWINGS

FIG. 1 is a diagram of an example of an architecture of a communication system used in an embodiment of this application;
FIG. 2 is a diagram of a 5G user plane protocol stack;
FIG. 3 is a diagram of a 5G Uu user plane protocol stack and a PC5 user plane protocol stack;
FIG. 4 is a schematic flowchart of a method according to an embodiment of this application;
FIG. 5 is a schematic flowchart of a method according to another embodiment of this application;
FIG. 6 is a schematic flowchart of a method according to another embodiment of this application;
FIG. 7(a) is a diagram of a method and FIG. 7(b) to FIG. 7(e) are diagrams of protocol stacks according to an embodiment of this application;
FIG. 8 is a schematic flowchart of a method according to another embodiment of this application;
FIG. 9 is a schematic flowchart of a method according to another embodiment of this application;
FIG. 10 is a schematic flowchart of a method according to another embodiment of this application;
FIG. 11 is a diagram of a method and a diagram of protocol stacks according to an embodiment of this application;
FIG. 12 is a diagram of a communication apparatus 1200 according to an embodiment of this application;
FIG. 13 is a diagram of another communication apparatus 1300 according to an embodiment of this application; and
FIG. 14 is a diagram of a chip system 1400 according to an embodiment of this application.

### DESCRIPTION OF EMBODIMENTS

The following describes technical solutions in embodiments of this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to sidelink (sidelink, SL) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. In an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device.

A terminal device in embodiments of this application includes various devices having a wireless communication function, and the terminal device may be configured to connect to a person, an object, a machine, and the like. The terminal device may be widely used in various scenarios, for example, cellular communication, an SL, V2X, peer to peer (peer to peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-helicopter, a four-helicopter, or an airplane), a ship, a remote control device, a smart home device, or an industrial device; an apparatus built in the foregoing device (for example, a communication module, a modem, or a chip in the foregoing device); or another processing device connected to the wireless modem.

It should be understood that in some scenarios, the terminal device may alternatively serve as a base station. For example, the terminal device may serve as a scheduling entity that provides a sidelink signal between terminal devices in a V2X scenario, an SL scenario, a P2P scenario, or the like.

In embodiments of this application, an apparatus configured to implement a function of the terminal device, namely, a terminal apparatus, may be a terminal device; or may be an apparatus, for example, a chip system or a chip, that can support a terminal device in implementing the function, and the apparatus may be mounted in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, or M2M communication, a network side device in a 6th generation (6th generation, 6G) network, a device that bears a base station function in a future communication system, or the like. The base station may support networks of a same access technology or different access technologies. A specific technology and a specific device form that are used for the network device are not limited in embodiments of this application.

The base station may be fixed or movable. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In embodiments of this application, an apparatus configured to implement a function of the network device may be a network device; or may be an apparatus, for example, a chip system or a chip, that can support a network device in implementing the function, and the apparatus may be mounted in the network device. In embodiments of this application, the chip system may include a chip, or may include a chip and another discrete component.

The network device and the terminal device may be deployed on land, where the deployment includes indoor or outdoor, or handheld or vehicle-mounted deployment; may be deployed on water; or may be deployed on an aerocraft, a balloon, and a satellite in air. Scenarios in which the network device and the terminal device are located are not limited in embodiment of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

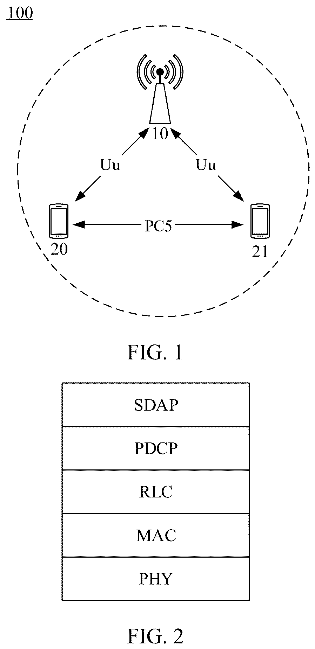

FIG. 1 is a diagram of a communication system 100 applicable to an embodiment of this application. The communication system 100 shown in FIG. 1 includes a network device 10, a terminal device 20, and a terminal device 21.

Both the terminal device 20 and the terminal device 21 are within coverage of the network device 10, and the network device 10 communicates with the terminal device through a Uu interface. Communication between the terminal device 20 and the network device 10 is used as an example. The terminal device 20 may send uplink data to the network device 10 through a physical uplink shared channel (physical uplink shared channel, PUSCH), and the network device 10 may send downlink data to the terminal device 20 through a physical downlink shared channel (physical downlink shared channel, PDSCH). After receiving the downlink data from the network device 10, the terminal device 20 may send a hybrid automatic repeat request (hybrid automatic repeat request, HARQ) feedback to the network device through a physical uplink control channel (physical uplink control channel, PUCCH) or the PUSCH. Both a transmission resource for downlink sending from the network device 10 to the terminal device 20 and a transmission resource for uplink sending from the terminal device 20 to the network device 10 are scheduled or configured by the network device 20.

The terminal device 20 communicates with the terminal device 21 through a PC5 interface. For example, the terminal device 20 is a transmitting UE, and the terminal device 20 may send data to the terminal device 21 through a physical sidelink shared channel (physical sidelink shared channel, PSSCH). After the terminal device 21 receives the data from the terminal device 20, the terminal device 21 may send a HARQ feedback to the terminal device 20 through a physical sidelink feedback channel (physical sidelink feedback channel, PSFCH). A PSFCH resource is a periodic resource configured (in advance) in a resource pool. A resource used by the terminal device 20 to send data to the terminal device 21 may be scheduled or configured by the network device 10, or may be selected by the terminal device 20.

FIG. 2 is a diagram of a 5G user plane protocol stack. As shown in FIG. 2, regardless of a Uu interface or a PC5 interface, a user plane protocol stack includes a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical layer (physical, PHY). The SDAP layer is mainly responsible for mapping a quality of service (quality of service, QoS) flow to a data radio bearer (data radio bearer, DRB). The PDCP layer is mainly responsible for header compression, encryption, and integrity protection. The RLC layer is mainly responsible for data segmentation and reassembly. The MAC layer is responsible for logical channel multiplexing, HARQ retransmission, and scheduling-related functions. The PHY is mainly responsible for functions such as encoding, decoding, modulation, demodulation, and multi-antenna mapping. For each layer in the protocol stack, data received from an upper layer (or data sent to an upper layer) may be referred to as a service data unit (service data unit, SDU), and data sent to a lower layer (or data received from a lower layer) may be referred to as a protocol data unit (protocol data unit, PDU). For example, data received by the RLC layer from the PDCP layer may be referred to as an RLC SDU (which may also be referred to as a PDCP PDU), and data output after being processed by the RLC layer is referred to as an RLC PDU (which may also be referred to as a MAC SDU). A channel between the RLC layer and the MAC layer is referred to as a logical channel. The MAC layer may perform logical multiplexing, to be specific, multiplex one or more RLC PDUs from the RLC layer into one MAC PDU and transfer the MAC PDU to the PHY. For the PHY, a MAC PDU is also referred to as a transport block (transport block, TB).

In applications such as the industrial internet, an ultra-reliable low-latency communication (ultra-reliable low-latency communication, URLLC) service have extremely high requirements on a latency and reliability. On the one hand, a latency can be reduced through SL direct communication. On the other hand, because a device, for example, a mobile robot exists in a factory environment, an SL channel may be temporarily blocked, and consequently, it may be difficult to meet a strict reliability requirement only through an SL (a PC5 interface).

To ensure service transmission reliability, a PDCP duplication transmission method is provided based on the communication system shown in FIG. 1. When a terminal device 20 (an example of a transmitting UE (transmitting UE, TX UE)) and a terminal device 21 (an example of a receiving UE (receiving UE, RX UE)) each have a Uu protocol stack and a PC5 protocol stack, and both the terminal device 20 and the terminal device 21 are within coverage of the network device 10, a path diversity gain can be provided between the terminal device 20 and the terminal device 21 through Uu and PC5 redundant transmission, to avoid a case in which reliable transmission cannot be implemented when quality of an SL channel deteriorates (for example, the SL channel is blocked).

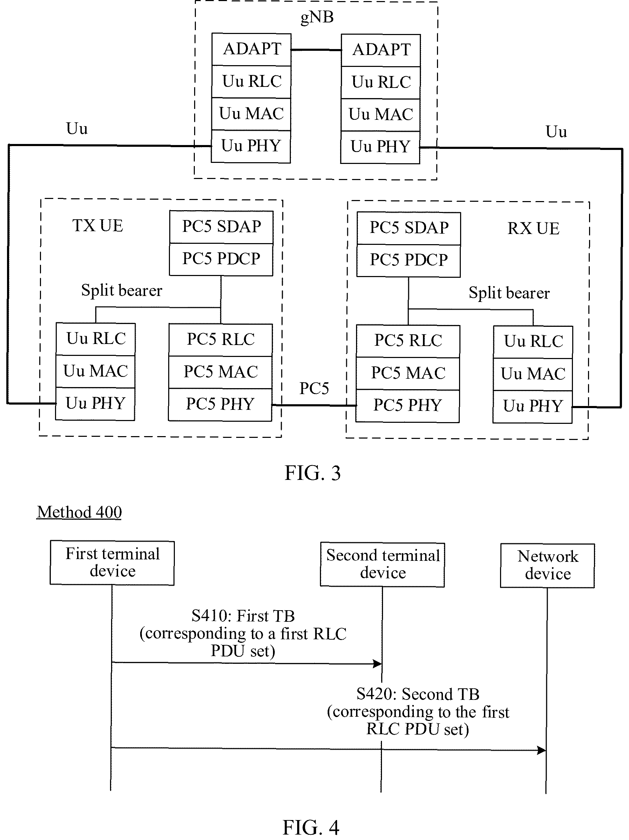

As shown in FIG. 3, a gNB (an example of a network device) may be used as a forwarding node between an RLC layer of a Uu protocol stack of a TX UE and an RLC layer of a Uu protocol stack of an RX UE, and a PDCP layer of a PC5 protocol stack of the TX UE and/or the RX UE is responsible for path management. Redundant transmission is performed on a data packet between the TX UE and the RX UE through two paths to ensure reliability. The TX UE sends a PC5 PDCP PDU to the RX UE through a PC5 protocol stack, where the PC5 protocol stack includes a PC5 RLC layer, a PC5 MAC layer, and a PC5 PHY. In addition, the TX UE first sends the PC5 PDCP PDU to a network device through a Uu protocol stack, and then the network device forwards an uplink RLC SDU to a downlink RLC layer through a newly added protocol layer (for example, referred to as an adaptation (adaptation, ADAPT) layer), and then sends data in the uplink RLC SDU to the RX UE through a Uu MAC layer and a Uu PHY.

In a rapidly changing environment, if reliable transmission is implemented always through PDCP duplication, a large quantity of resources may be wasted, that is, regardless of whether data between a TX UE and an RX UE is correctly transmitted through an SL, a network device forwards the data to the RX UE, resulting in high resource overheads.

In view of this, embodiments of this application provide a data transmission method, to avoid a waste of resources while ensuring transmission reliability.

FIG. 4 is a schematic flowchart of a data transmission method 400 according to an embodiment of this application. As shown in FIG. 4, the method 400 may include the following steps.

S410: A first terminal device sends a first TB to a second terminal device.

For example, the first terminal device sends the first TB to the second terminal device on a first resource through a sidelink. The first TB corresponds to a first RLC PDU set, in other words, the first TB includes an RLC PDU in the first RLC PDU set, in other words, a MAC PDU corresponding to the first TB is obtained by multiplexing an RLC PDU in the first RLC PDU set. Optionally, the first TB further includes an RLC PDU other than the RLC PDU in the first RLC PDU set. For example, the first RLC PDU set includes an RLC PDU #1 and an RLC PDU #2, and the first TB includes the RLC PDU #1, the PLC PDU #2, and an RLC PDU #3, where the RLC PDU #3 is different from the RLC PDU #1 and the RLC PDU #2.

The first RLC PDU set includes at least one PC5 RLC PDU, and the at least one PC5 RLC PDU is obtained by the first terminal device by processing at least one PC5 RLC SDU through a PC5 RLC entity. After processing the at least one PC5 RLC SDU through the PC5 RLC entity to obtain the at least one PC5 RLC PDU, the first terminal device sends the at least one PC5 RLC PDU to a PC5 MAC entity through the PC5 RLC entity. Further, the first terminal device may generate the first TB based on the at least one PC5 RLC PDU through the PC5 MAC entity. The PC5 RLC PDU indicates an RLC PDU corresponding to a PC5 protocol stack, or may have another name, for example, an RLC PDU of the PC5 protocol stack. The PC5 RLC entity indicates an RLC entity of the PC5 protocol stack. Another PDU, SDU, or entity is also a similar concept.

It should be noted that another protocol layer may be further included between a PC5 RLC layer and a PC5 MAC layer of the first terminal device. This is not limited in embodiments of this application.

The first resource and a first logical channel set have a mapping relationship, in other words, the first resource and a logical channel included in the first logical channel set have a mapping relationship. The first logical channel set includes at least one logical channel #1, and the at least one logical channel #1 is used for transmission of the RLC PDU in the first RLC PDU set between the PC5 RLC entity and the PC5 MAC entity of the first terminal device. The first terminal device may determine, based on the mapping relationship between the first resource and the first logical channel set, that the first resource is used for transmission of a TB, for example, the first TB, generated by the PC5 MAC entity based on the RLC PDU in the first RLC PDU set. The mapping relationship between the first resource and the first logical channel set may be indicated or configured by a network device; or may be determined by the first terminal device, for example, indicated by higher layer signaling of the first terminal device.

S420: The first terminal device sends a second TB to the network device.

For example, the first terminal device sends the second TB to the network device on a second resource through an uplink. The first terminal device may send the second TB to the network device when generating the second TB. Alternatively, when a first condition is met, the first terminal device sends the second TB to the network device. For more descriptions of the first condition, refer to S608 in the following method 600.

The second TB corresponds to the first RLC PDU set, in other words, the second TB includes an RLC PDU in the first RLC PDU set, in other words, a MAC PDU corresponding to the second TB is obtained by multiplexing an RLC PDU in the first RLC PDU set. Optionally, the second TB further includes an RLC PDU other than the RLC PDU in the first RLC PDU set. For example, the first RLC PDU set includes an RLC PDU #1 and an RLC PDU #2, and the second TB includes the RLC PDU #1, the RLC PDU #2, and an RLC PDU #4, where the RLC PDU #4 is different from the RLC PDU #1 and the RLC PDU #2.

The first RLC PDU set includes the at least one PC5 RLC PDU, and the at least one PC5 RLC PDU is obtained by the first terminal device by processing the at least one PC5 RLC SDU through the PC5 RLC entity. After processing the at least one PC5 RLC SDU through the PC5 RLC entity to obtain the at least one PC5 RLC PDU, the first terminal device sends the at least one PC5 RLC PDU to a Uu MAC entity through the PC5 RLC entity. Then, the first terminal device may generate the first TB based on the at least one PC5 RLC PDU through the Uu MAC entity.

The second resource and a second logical channel set have a mapping relationship, in other words, the second resource and a logical channel included in the second logical channel set have a mapping relationship. The second logical channel set includes at least one logical channel #2, and the at least one logical channel #2 is used for transmission of the RLC PDU in the first RLC PDU set between the PC5 RLC entity and the Uu MAC entity of the first terminal device. The first terminal device may determine, based on the mapping relationship between the second resource and the second logical channel set, that the second resource is used for transmission of a TB, for example, the second TB, generated by the Uu MAC entity based on the RLC PDU in the first RLC PDU set.

The first logical channel set is associated with the second logical channel set. When the first logical channel set is associated with the second logical channel set, the first terminal device may perform transmission of a same RLC PDU through the first logical channel set and the second logical channel set. For example, the first terminal device performs transmission of the RLC PDU in the first RLC PDU set through the first logical channel set and the second logical channel set. The association relationship between the first logical channel set and the second logical channel set may be configured by the network device; determined by the first terminal device, for example, indicated by higher layer signaling of the first terminal device; determined by the first terminal device and the second terminal device through negotiation; or predefined.

For example, a logical channel identifier (logic channel identity, LCID) included in the first logical channel set is the same as an LCID included in the second logical channel set. For example, LCIDs included in the first logical channel set are {1, 2}, and LCIDs included in the second logical channel set are {1, 2}. The LCID included in the logical channel set may also be referred to as an LCID corresponding to a logical channel included in the logical channel set.

For another example, an LCID included in the first logical channel set and an LCID included in the second logical channel set have a mapping relationship. For example, LCIDs included in the first logical channel set are {1, 2}, and LCIDs included in the second logical channel set are {3, 4}, where the LCID 1 is associated with the LCID 3, and the LCID 2 is associated with the LCID 4.

In embodiments of this application, the first TB sent by the first terminal device to the second terminal device and the second TB sent by the first terminal device to the network device correspond to the same first RLC PDU set. Therefore, after receiving a HARQ feedback of the second terminal device for the first TB, the first terminal device or the network device may use the HARQ feedback of the second terminal device for the first TB as a feedback for a receiving status of the RLC PDU of the first RLC PDU set. In this case, this helps the first terminal device or the network device determine, based on the HARQ feedback of the second terminal device for the first TB, whether the network device sends the RLC PDU in the first RLC PDU set to the second terminal device. For example, if the HARQ feedback of the second terminal device for the first TB indicates that the second terminal device correctly receives the first TB, the first terminal device or the network device determines that the network device does not send the RLC PDU in the first RLC PDU set to the second terminal device, thereby reducing resource consumption.

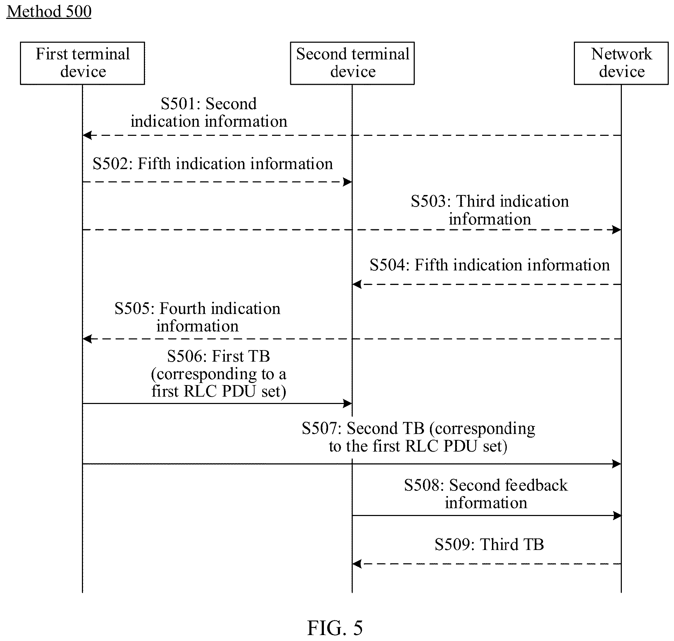

Based on the descriptions of the method 400, the following describes, with reference to FIG. 5, how the network device determines, based on the HARQ feedback of the second terminal device for the first TB, whether the network device sends the RLC PDU in the first RLC PDU set to the second terminal device.

FIG. 5 is a schematic flowchart of a data transmission method 500 according to an embodiment of this application. As shown in FIG. 5, the method 500 may include the following steps.

In a possible implementation, before the method 500 is performed, if a first terminal device and/or a second terminal device do/does not determine a resource used for transmission of data or feedback information, the method 500 further includes a step of configuring, by a network device, a resource for the first terminal device and/or a resource for the second terminal device.

The following describes the step of configuring, by a network device, a resource for the first terminal device and/or a resource for the second terminal device.

In a possible implementation, the step of configuring, by a network device, a resource for the first terminal device and/or a resource for the second terminal device includes S501 and S504.

S501: The network device sends second indication information to the first terminal device.

Correspondingly, the first terminal device receives the second indication information from the network device.

The second indication information indicates at least one of the following: time-domain resource position information and/or frequency-domain resource position information of a first resource; a mapping relationship between a first resource and a logical channel; time-domain resource position information and/or frequency-domain resource position information of a second resource; a mapping relationship between a second resource and a logical channel; or time-domain resource position information and/or frequency-domain resource position information of a third resource.

The first resource is used by the first terminal device to send a first TB to the second terminal device. For example, the first resource is a PSSCH resource. For descriptions of the first TB, refer to S410. The time-domain resource position information of the first resource may include one or more of the following: a time resource indicator value (time resource indicator value, TRIV) corresponding to the first resource, an index (index) of a time-domain unit included in the first resource, time-domain unit offset information of the time-domain unit included in the first resource relative to a time-domain unit in which the second indication information is located, an index of a start time-domain unit included in the first resource, or a quantity of time-domain units included in the first resource. The time-domain unit may be a slot (slot), a mini-slot (mini-slot), a symbol (symbol), a frame (frame), or the like. The frequency-domain resource position information of the first resource may include one or more of the following: a frequency resource indicator value (frequency resource indicator value, FRIV) corresponding to the first resource, an index of a frequency-domain unit included in the first resource, an index of a start frequency-domain unit included in the first resource, or a quantity of frequency-domain units included in the first resource. The frequency-domain unit may be a subchannel (subchannel), a subband (subband), a physical resource block (physical resource block, PRB), a resource element (resource element, RE), a subcarrier (subcarrier), a carrier (carrier), a bandwidth part (bandwidth part, BWP), or the like. If the first resource is a preconfigured resource, the second indication information may not indicate the time-domain resource position information and/or the frequency-domain resource position information of the first resource.

The mapping relationship between the first resource and the logical channel may include a mapping relationship between the first resource and a first logical channel set. For descriptions of the first logical channel set, refer to S410. If the mapping relationship between the first resource and the logical channel is preconfigured in the first terminal device, the second indication information may not indicate the mapping relationship between the first resource and the logical channel.

The second resource is used by the first terminal device to send a second TB to the network device. For example, the second resource is a PUSCH resource. For descriptions of the second TB, refer to S420. The time-domain resource position information of the second resource may include one or more of the following: a TRIV corresponding to the second resource, an index of a time-domain unit included in the second resource, time-domain unit offset information of the time-domain unit included in the second resource relative to a time-domain unit in which the second indication information is located, an index of a start time-domain unit included in the second resource, or a quantity of time-domain units included in the second resource. The frequency-domain resource position information of the second resource may include one or more of the following: an FRIV corresponding to the second resource, an index of a frequency-domain unit included in the second resource, an index of a start frequency-domain unit included in the second resource, or a quantity of frequency-domain units included in the second resource. If the second resource is a preconfigured resource, the second indication information may not indicate the time-domain resource position information and/or the frequency-domain resource position information of the second resource.

The mapping relationship between the second resource and the logical channel may include a mapping relationship between the second resource and a second logical channel set. For descriptions of the second logical channel set, refer to S420. If the mapping relationship between the second resource and the logical channel is preconfigured in the first terminal device, the second indication information may not indicate the mapping relationship between the second resource and the logical channel.

The first resource and/or the second resource may be a configured grant (configured grant, CG) resource, or may be a dynamic grant (dynamic grant, DG) resource.

For example, the first resource is a resource, in a first periodicity, of a first CG resource configured by the network device, and the second resource is a resource, in a second periodicity, of a second CG resource configured by the network device. Both the first CG resource and the second CG resource are periodic resources. Optionally, a periodicity corresponding to the first CG resource is the same as a periodicity corresponding to the second CG resource, and a HARQ process number corresponding to the resource, in the first periodicity, of the first CG resource and a HARQ process number corresponding to the resource, in the second periodicity, of the second CG resource have an association relationship.

The network device configures, by using radio resource control (radio resource control, RRC) signaling, a CG index, a modulation and coding scheme (modulation and coding scheme, MCS) parameter, HARQ process number information, a periodicity, time-domain resource position information, frequency-domain resource position information, and the like that correspond to the first CG resource and/or a CG index, a MCS parameter, HARQ process number information, a periodicity, time-domain resource position information, frequency-domain resource position information, and the like that correspond to the second CG resource; or the network device configures, by using RRC signaling, a CG index, an MCS parameter, HARQ process number information, a periodicity, and the like that correspond to the first CG resource and/or a CG index, an MCS parameter, HARQ process number information, a periodicity, and the like that correspond to the second CG resource; and then the network device activates the first CG resource and/or the second CG resource by using downlink control information (downlink control information, DCI), and includes, in the DCI, the time-domain resource position information and the frequency-domain resource position information that correspond to the first CG resource and/or the time-domain resource position information and the frequency-domain resource position information that correspond to the second CG resource.

The first CG resource and the second CG resource that are configured by the network device are bound or mapped to one or more same logical channels, in other words, a logical channel to which the first CG resource is bound or mapped and a logical channel to which the second CG resource is bound or mapped have an association relationship, in other words, the first CG resource and the second CG resource are bound or mapped to a same radio bearer (radio bearer, RB). For another example, the first resource is a resource, in a first periodicity, of the first CG resource configured by the network device, and the second resource is a second DG resource configured or scheduled by the network device by using DCI, where the first CG resource and the second DG resource are bound or mapped to one or more same logical channels, in other words, a logical channel to which the first CG resource is bound or mapped and a logical channel to which the second DG resource is bound or mapped have an association relationship, in other words, the first CG resource and the second DG resource are bound or mapped to a same radio bearer.

For another example, the first resource is a first DG resource configured or scheduled by the network device by using DCI, and the second resource is a second DG resource configured or scheduled by the network device by using DCI, where the first DG resource and the second DG resource are bound or mapped to one or more same logical channels, in other words, a logical channel to which the first DG resource is bound or mapped and a logical channel to which the second DG resource is bound or mapped have an association relationship, in other words, the first DG resource and the second DG resource are bound or mapped to a same radio bearer.

Optionally, before the network device configures the first resource and/or the second resource for the first terminal device, the first terminal device may send assistance information to the network device, for example, a buffer status report (buffer status report, BSR), channel state information (channel state information, CSI) between the first terminal device and the network device, and CSI between the first terminal device and the second terminal device, so that the network device determines a size of the first resource and/or a size of the second resource, an MCS parameter corresponding to the first TB and/or an MCS parameter corresponding to the second TB, and the like.

The third resource is used by the second terminal device to send second feedback information to the network device. For example, the third resource is a PUCCH resource. For descriptions of the second feedback information, refer to S508 below. For brevity, details are not described herein. The time-domain resource position information of the third resource may include one or more of the following: a TRIV corresponding to the third resource, an index of a time-domain unit included in the third resource, an index of a start time-domain unit included in the third resource, a quantity of time-domain units included in the third resource, time-domain unit offset information of the time-domain unit included in the third resource relative to a time-domain unit in which the second indication information is located, time-domain unit offset information of the time-domain unit included in the third resource relative to the time-domain unit included in the first resource, or time-domain unit offset information of the time-domain unit included in the third resource relative to the time-domain unit included in the second resource. The frequency-domain resource position information of the third resource may include one or more of the following: an FRIV included in the third resource, an index of a frequency-domain unit included in the third resource, an index of a start frequency-domain unit included in the third resource, a quantity of frequency-domain units included in the third resource, frequency-domain unit offset information of the frequency-domain unit included in the third resource relative to the frequency-domain unit included in the first resource, or frequency-domain unit offset information of the frequency-domain unit included in the third resource relative to the frequency-domain unit included in the second resource. A time-domain position of the third resource is after a time-domain position of the first resource.

The third resource is a resource used by the second terminal device to send the second feedback information to the network device. If the first terminal device does not need to know information about the third resource, the second indication information may not indicate the time-domain resource position information and/or the frequency-domain resource position information of the third resource. For example, the first resource is a resource, in a first periodicity, of a first CG resource configured by the network device, the network device configures a PUCCH resource corresponding to the first CG resource in each periodicity, and the third resource is a PUCCH resource corresponding to the first CG resource in the first periodicity. For example, the network device indicates, by using RRC signaling, a MAC control element (medium access control control element, MAC CE), or DCI, a PUCCH resource index (PUCCH-ResourceId) corresponding to the first CG resource, where PUCCH resource information corresponding to each PUCCH resource index may be preconfigured by the network device for the first terminal device, and the PUCCH resource information corresponding to each PUCCH resource index may include a PUCCH resource format, a start symbol index in a slot, a quantity of symbols, a start PRB position, a quantity of PRBs, a cyclic shift of a sequence, time-domain orthogonal cover code (orthogonal cover code, OCC) information, and the like. The network device may further indicate, by using RRC signaling, a MAC CE, or DCI, slot offset information of the PUCCH resource corresponding to the first CG resource in each periodicity, for example, a slot offset of the third resource relative to the first resource, a slot offset of the third resource relative to the second resource, or a slot offset of the third resource relative to a PSFCH resource associated with the first resource.

S504: The network device sends fifth indication information to the second terminal device.

Correspondingly, the second terminal device receives the fifth indication information from the network device.

The fifth indication information indicates at least one of the following: the time-domain resource position information and/or the frequency-domain resource position information of the first resource; the mapping relationship between the first resource and the logical channel; the time-domain resource position information and/or the frequency-domain resource position information of the second resource; the mapping relationship between the second resource and the logical channel; or the time-domain resource position information and/or the frequency-domain resource position information of the third resource.

For more descriptions of the fifth indication information, refer to the foregoing descriptions of the second indication information in S501.

For example, the first resource and the second resource are resources used by the first terminal device to send data, and the second terminal device may not know information about the first resource and information about the second resource. Therefore, in some implementations, the fifth indication information may not indicate one or more of the following: the time-domain resource position information and/or the frequency-domain resource position information of the first resource, the mapping relationship between the first resource and the logical channel, the time-domain resource position information and/or the frequency-domain resource position information of the second resource, or the mapping relationship between the second resource and the logical channel.

S501 and S504 may be a same step or different steps. For example, the network device may send indication information to the first terminal device and the second terminal device in a multicast or broadcast manner. In this case, the second indication information sent by the network device to the first terminal device is the same as the fifth indication information sent by the network device to the second terminal device. For another example, the network device may separately send the second indication information to the first terminal device and the fifth indication information to the second terminal device in a unicast manner. In this case, the second indication information sent by the network device to the first terminal device is the same as or different from the fifth indication information sent by the network device to the second terminal device. For example, the second indication information sent by the network device to the first terminal device indicates information related to the first resource and the second resource, and the fifth indication information sent by the network device to the second terminal device indicates information related to the third resource. When S501 and S504 are different steps, S501 may be performed before S504, or may be performed after S504.

In a possible implementation, the step of configuring, by a network device, a resource for the first terminal device and/or a resource for the second terminal device includes S501 and S502.

S501: The network device sends second indication information to the first terminal device.

Correspondingly, the first terminal device receives the second indication information from the network device.

S502: The first terminal device sends fifth indication information to the second terminal device.

Correspondingly, the second terminal device receives the fifth indication information from the first terminal device.

The fifth indication information indicates at least one of the following: time-domain resource position information and/or frequency-domain resource position information of a first resource; a mapping relationship between a first resource and a logical channel; time-domain resource position information and/or frequency-domain resource position information of a second resource; a mapping relationship between a second resource and a logical channel; or time-domain resource position information and/or frequency-domain resource position information of a third resource.

After receiving the second indication information from the network device, the first terminal device may send the fifth indication information to the second terminal device based on the second indication information.

For example, content indicated by the fifth indication information sent by the first terminal device is the same as content indicated by the second indication information. For example, both the second indication information and the fifth indication information indicate the following plurality of items: the time-domain resource position information and/or the frequency-domain resource position information of the first resource, the time-domain resource position information and/or the frequency-domain resource position information of the second resource, and the time-domain resource position information and/or the frequency-domain resource position information of the third resource.

For example, content indicated by the fifth indication information sent by the first terminal device is different from content indicated by the second indication information. For example, the second indication information indicates the following plurality of items: the time-domain resource position information and/or the frequency-domain resource position information of the first resource, the time-domain resource position information and/or the frequency-domain resource position information of the second resource, and the time-domain resource position information and/or the frequency-domain resource position information of the third resource. The fifth indication information indicates the time-domain resource position information and/or the frequency-domain resource position information of the third resource.

In a possible implementation, the step of configuring, by a network device, a resource for the first terminal device and/or a resource for the second terminal device includes S503 to S505.

S503: The first terminal device sends third indication information to the network device.

Correspondingly, the network device receives the third indication information from the first terminal device.

The third indication information indicates at least one of the following: time-domain resource position information and/or frequency-domain resource position information of a first resource; a mapping relationship between a first resource and a logical channel; or requesting the network device to schedule a second resource and/or a third resource.

The first resource indicated by the third indication information may be a resource determined by the first terminal device or the second terminal device from an SL resource pool that is preconfigured or that is configured by the network device. For example, the first terminal device selects the first resource in a resource sensing and resource selection process; or the second terminal device selects the first resource in a resource sensing and resource selection process, and indicates related information of the first resource to the first terminal device.

After receiving the third indication information from the first terminal device, the network device may determine the second resource and/or the third resource based on the third indication information. Optionally, before the network device determines the second resource, the first terminal device may send assistance information to the network device, for example, a BSR, a TB size of a first TB and/or a TB size of a second TB, CSI between the first terminal device and the network device, and CSI between the first terminal device and the second terminal device, so that the network device determines a size of the second resource, an MCS parameter corresponding to the second TB, and the like.

S504: The network device sends fifth indication information to the second terminal device.

Correspondingly, the second terminal device receives the fifth indication information from the network device.

The fifth indication information indicates at least one of the following: the time-domain resource position information and/or the frequency-domain resource position information of the first resource; the mapping relationship between the first resource and the logical channel; time-domain resource position information and/or frequency-domain resource position information of the second resource; a mapping relationship between the second resource and a logical channel; or time-domain resource position information and/or frequency-domain resource position information of the third resource.

After receiving the third indication information from the first terminal device, the network device may send the fifth indication information to the second terminal device based on the third indication information. For example, if the third indication information indicates the time-domain resource position information of the first resource, the network device may determine time-domain position information of the third resource based on the time-domain resource position information of the first resource, where a time-domain position of the third resource is after a time-domain position of the first resource. Then, the network device may send the fifth indication information to the second terminal device, where the fifth indication information indicates the time-domain resource position information of the third resource, or the fifth indication information indicates the time-domain resource position information and the frequency-domain resource position information of the third resource.

S505: The network device sends fourth indication information to the first terminal device.

Correspondingly, the first terminal device receives the fourth indication information from the network device.

After receiving the third indication information from the first terminal device, the network device may send the fourth indication information to the first terminal device based on the third indication information. The fourth indication information indicates at least one of the following: the time-domain resource position information and/or the frequency-domain resource position information of the second resource, an association relationship between the first resource and the logical channel, an association relationship between the second resource and the logical channel, or the time-domain resource position information and/or the frequency-domain resource position information of the third resource.

For example, if the third indication information indicates the association relationship between the first resource and the logical channel, the network device may determine, based on an association relationship between the first resource and a first logical channel set, the second resource having an association relationship with a second logical channel set. In this way, the network device may send the fourth indication information to the first terminal device, where the fourth indication information indicates at least one of the following: the time-domain resource position information and/or the frequency-domain resource position information of the second resource, or the association relationship between the second resource and the logical channel. For another example, if the third indication information requests the network device to schedule the second resource and/or the third resource, the network device may send the fourth indication information to the first terminal device based on the third indication information, where the fourth indication information indicates at least one of the following: the time-domain resource position information and/or the frequency-domain resource position information of the second resource, the association relationship between the second resource and the logical channel, or the time-domain resource position information and/or the frequency-domain resource position information of the third resource.

Optionally, in this implementation, if the fourth indication information sent by the network device to the first terminal device indicates the time-domain resource position information and/or the frequency-domain resource position information of the third resource, the network device may not send the fifth indication information to the second terminal device, but the first terminal device sends the fifth indication information to the second terminal device based on the fourth indication information.

It may be understood that before the network device configures the resource for the first terminal device and/or the resource for the second terminal device, the first terminal device, the second terminal device, and the network device may exchange an association relationship between PC5 identification information (for example, a source identity (identity, ID) and a destination ID) and Uu identification information (for example, a radio network temporary identifier (radio network temporary identifier, RNTI)) in advance, for the network device to perform resource configuration. The source ID (including a source ID corresponding to data sent by the first terminal device to the second terminal device) and the destination ID (including a destination ID corresponding to the data sent by the first terminal device to the second terminal device) are identities for exchanging information between the first terminal device and the second terminal device through a PC5 interface. The source ID and the destination ID may alternatively be a layer 2 (layer 2, L2) ID or a layer 1 (layer 1, L1) ID. The RNTI includes an RNTI corresponding to the first terminal device and an RNTI corresponding to the second terminal device, the RNTI corresponding to the first terminal device is an identifier for exchanging information between the first terminal device and the network device through a Uu interface, and the RNTI corresponding to the second terminal device is an identifier for exchanging information between the second terminal device and the network device through a Uu interface. Data sent by the first terminal device and/or the second terminal device to the network device is scrambled by using an RNTI, or data sent by the network device to the first terminal device and/or the second terminal device is scrambled by using an RNTI. For example, if the first terminal device has data (for example, the first TB described above) to be sent to the second terminal device, the first terminal device may send a resource scheduling request (for example, the third indication information described above) to the network device. The resource scheduling request may indicate one or more of a source ID, a destination ID, and an RNTI. The network device may determine an RNTI of the second terminal device based on the resource scheduling request, and send resource configuration information (for example, the fifth indication information described above) to the second terminal device based on the RNTI of the second terminal device.

Further, S506 to S508 in the method 500 continue to be performed.

S506: The first terminal device sends a first TB to the second terminal device.

For more descriptions of S506, refer to S410 in the foregoing method 400.

S507: The first terminal device sends a second TB to the network device.

For more descriptions of S507, refer to S420 in the foregoing method 400.

Optionally, in the method 500, if the first terminal device receives first feedback information from the second terminal device, the first terminal device may determine, based on the first feedback information, whether to send the second TB to the network device. For related descriptions of the first feedback information, refer to S607 in the following method 600. For descriptions of how the first terminal device determines, based on the first feedback information, whether to send the second TB to the network device, refer to S608 in the following method 600.

Optionally, in the method 500, if the first terminal device receives the first feedback information from the second terminal device after sending the second TB to the network device, the first terminal device may send first indication information to the network device based on the first feedback information, where the first indication information indicates whether the network device sends an RLC PDU in a first RLC PDU set to the second terminal device. For more descriptions of sending, by the first terminal device, the first indication information to the network device based on the first feedback information, refer to S609 in the following method 600.

S508: The second terminal device sends second feedback information to the network device.

Correspondingly, the network device receives the second feedback information from the second terminal device.

For example, the second terminal device sends the second feedback information to the network device on the third resource through an uplink.

The second feedback information indicates at least one of the following: a status of receiving the first TB by the second terminal device, quality information of a channel between the first terminal device and the second terminal device, or whether the network device sends an RLC PDU included in the first RLC PDU set to the second terminal device. For example, the second feedback information is a HARQ feedback for the first TB.

The status of receiving the first TB by the second terminal device includes: The second terminal device correctly receives the first TB, or the second terminal device does not correctly receive the first TB. That the second terminal device correctly receives the first TB means that the second terminal device receives the first TB and correctly decodes the first TB. That the second terminal device does not correctly receive the first TB means that the second terminal device does not receive the first TB, and/or the second terminal device does not correctly decode the first TB. That the second terminal device correctly decodes the first TB means that the second terminal device correctly decodes all coding blocks (coding blocks, CBs) included in the first TB. That the second terminal device does not correctly decode the first TB means that the second terminal device correctly decodes no CBs included in the first TB or does not correctly decode some CBs included in the first TB. For example, information indicating the status of receiving the first TB by the second terminal device is acknowledgement (acknowledgement, ACK) information or negative acknowledgement (negative acknowledgement, NACK) information, where the ACK information indicates that the second terminal device correctly receives the first TB, and the NACK information indicates that the second terminal device does not correctly receive the first TB.

The quality information of the channel between the first terminal device and the second terminal device includes at least one of the following: reference signal received quality (reference signal received quality, RSRQ), a reference signal received power (reference signal received power, RSRP), a channel quality indicator (channel quality indication, CQI), CSI, a signal-to-noise ratio (signal-to-noise ratio, SNR), a signal to interference plus noise ratio (signal to interference plus noise ratio, SINR), transmission efficiency, or indication information indicating whether quality of the channel between the first terminal device and the second terminal device is lower than a first threshold. The first threshold may include an RSRP threshold, an RSRQ threshold, an SNR threshold, an SINR threshold, a transmission efficiency threshold, or the like. In another possible implementation, the quality information of the channel may further include other content. This is not specifically limited.

If the second terminal device correctly receives the first TB, the second feedback information may indicate the network device not to send the RLC PDU in the first RLC PDU set to the second terminal device, or the second feedback information may indicate an ACK. After receiving the ACK indicated by the second feedback information, the network device determines not to send the RLC PDU in the first RLC PDU set to the second terminal device. If the second terminal device does not correctly receive the first TB, and/or the quality of the channel between the first terminal device and the second terminal device is lower than the first threshold, the second feedback information may indicate the network device to send the RLC PDU in the first RLC PDU set to the second terminal device, or the second feedback information may indicate a NACK. After receiving the NACK indicated by the second feedback information or receiving no second feedback information on the third resource, the network device determines to send the RLC PDU in the first RLC PDU set to the second terminal device.

Optionally, the method 500 further includes S509.

S509: The network device sends a third TB to the second terminal device.

Correspondingly, the second terminal device receives the third TB from the network device.

The third TB is generated by the network device based on the RLC PDU in the first RLC PDU set, and the third TB includes one or more TBs. This is not limited in embodiments of this application. For example, after receiving the second TB from the first terminal device through an uplink Uu PHY and correctly decoding the second TB, the network device transfers a decoded bit to an uplink Uu MAC entity, and the uplink Uu MAC entity sends the RLC PDU in the first RLC PDU set included in the second TB to a downlink Uu MAC entity, so that the downlink Uu MAC entity may generate the third TB based on the RLC PDU in the first RLC PDU set.

Optionally, the third TB further includes an RLC PDU other than the RLC PDU in the first RCL PDU set. For example, the first RLC PDU set includes an RLC PDU #1 and an RLC PDU #2, and the third TB includes the RLC PDU #1, the RLC PDU #2, and an RLC PDU #5, where the RLC PDU #5 is different from the RLC PDU #1 and the RLC PDU #2.

After receiving the third TB, the second terminal device transfers the RLC PDU in the first RLC PDU set to a PC5 RLC entity through a Uu MAC entity.

In a possible implementation, when determining, based on the second feedback information, that a second condition is met, the network device sends the third TB to the second terminal device. The second condition includes one or more of the following: The second feedback information indicates that the second terminal device does not correctly receive the first TB; the second feedback information indicates that the quality of the channel between the first terminal device and the second terminal device is lower than the first threshold; or the second feedback information indicates the network device to send the RLC PDU in the first RLC PDU set to the second terminal device. That the second feedback information indicates that the quality of the channel between the first terminal device and the second terminal device is lower than the first threshold may be that the second feedback information directly indicates that the quality of the channel between the first terminal device and the second terminal device is lower than the first threshold; or the network device determines, based on the quality information that is of the channel between the first terminal device and the second terminal device and that is indicated by the second feedback information, that the quality of the channel between the first terminal device and the second terminal device is lower than the first threshold.

It may be understood that if the network device determines, based on the second feedback information, that the second condition is not met, the network device does not send the third TB to the second terminal device. Optionally, the network device may alternatively discard the RLC PDU in the first RLC PDU set. The network device determines, based on the second feedback information, that the second condition is not met, when the second feedback information indicates at least one of the following: The second feedback information indicates that the second terminal device correctly receives the first TB, the second feedback information indicates that the quality of the channel between the first terminal device and the second terminal device is not lower than the first threshold, or the second feedback information indicates the network device not to send the RLC PDU in the first RLC PDU set to the second terminal device.

Optionally, if the network device further receives the first indication information from the first terminal device, the second condition may further include one or more of the following: The first indication information indicates that the second terminal device does not correctly receive the first TB; the first indication information indicates that the quality of the channel between the first terminal device and the second terminal device is lower than the first threshold; or the first indication information indicates the network device to send the RLC PDU in the first RLC PDU set to the second terminal device.

In a possible implementation, when determining that a third condition is met, the network device sends the third TB to the second terminal device. The third condition is that at least one time-domain unit included in a first time-domain resource is before all time-domain units included in a second time-domain resource. The first time-domain resource is used by the network device to send an RLC PDU in the first RLC PDU set to the second terminal device, and the second time-domain resource is used by the first terminal device to retransmit an RLC PDU in the first RLC PDU set to the second terminal device.

It may be understood that when the third condition is met, the network device sends the third TB to the second terminal device, so that the second terminal device can receive the RLC PDU in the first RLC PDU set as early as possible. Therefore, a data transmission latency can be reduced.

Optionally, when the network device determines that the third condition is not met, the network device indicates the first terminal device to retransmit the RLC PDU in the first RLC PDU set to the second terminal device. For example, the network device sends indication information #1 to the first terminal device, where the indication information #1 indicates the first terminal device to retransmit the RLC PDU in the first RLC PDU set to the second terminal device, and/or the indication information #1 indicates the first terminal device to retransmit, to the second terminal device, time-domain resource position information and/or frequency-domain resource position information corresponding to the RLC PDU in the first RLC PDU set.

In a possible implementation, when determining that the second condition and the third condition are met, the network device sends the third TB to the second terminal device.

In embodiments of this application, the first TB sent by the first terminal device to the second terminal device and the second TB sent by the first terminal device to the network device correspond to the same first RLC PDU set, so that after receiving the second feedback information from the second terminal device, the network device may determine, based on the second feedback information, whether to send the RLC PDU in the first RLC PDU set to the second terminal device. In comparison with a manner in which the network device directly sends the RLC PDU in the first RLC PDU set to the second terminal device, the method provided in this application helps reduce resource consumption while ensuring transmission reliability. For example, if the second feedback information indicates that the second terminal device correctly receives the first TB, the network device does not send the RLC PDU in the first RLC PDU set to the second terminal device, thereby reducing resource consumption.

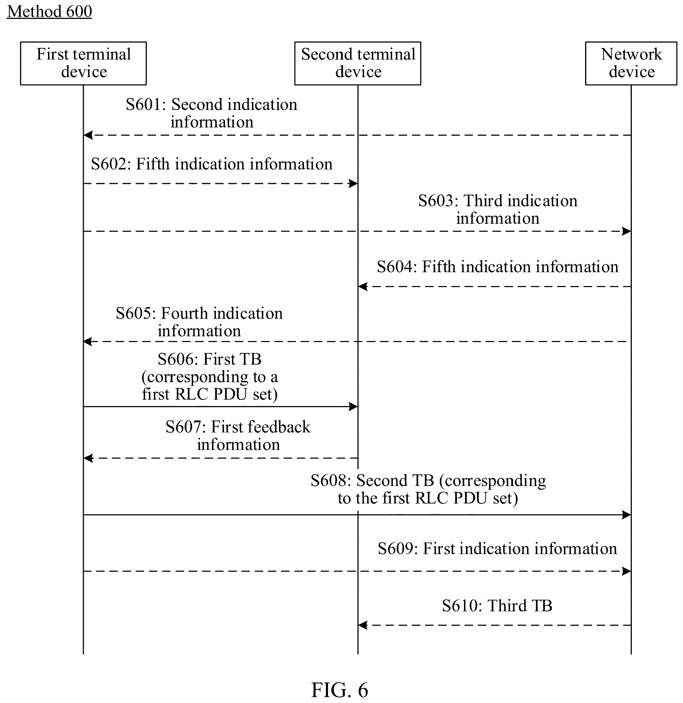

Based on the descriptions of the method 400, the following describes, with reference to FIG. 6, how the first terminal device determines, based on the HARQ feedback of the second terminal device for the first TB, whether the network device sends the RLC PDU included in the first RLC PDU set to the second terminal device.

FIG. 6 is a schematic flowchart of a data transmission method 600 according to an embodiment of this application. As shown in FIG. 6, the method 600 may include the following steps.

In a possible implementation, before the method 600 is performed, if a first terminal device and/or a second terminal device do/does not determine a resource used for transmission of data or feedback information, the method 600 further includes a step of configuring, by a network device, a resource for the first terminal device and/or a resource for the second terminal device.

The following describes the step of configuring, by a network device, a resource for the first terminal device and/or a resource for the second terminal device.

In a possible implementation, the step of configuring, by a network device, a resource for the first terminal device and/or a resource for the second terminal device includes S601 and S604.

S601: The network device sends second indication information to the first terminal device.

Correspondingly, the first terminal device receives the second indication information from the network device.

For more descriptions of S601, refer to S501 in the foregoing method 500.

S604: The network device sends fifth indication information to the second terminal device.

Correspondingly, the second terminal device receives the fifth indication information from the network device.

For more descriptions of S604, refer to S504 in the foregoing method 500.

In a possible implementation, the step of configuring, by a network device, a resource for the first terminal device and/or a resource for the second terminal device includes S601 and S602.

S601: The network device sends second indication information to the first terminal device.

Correspondingly, the first terminal device receives the second indication information from the network device.

S602: The first terminal device sends fifth indication information to the second terminal device.

Correspondingly, the second terminal device receives the fifth indication information from the first terminal device.

For more descriptions of S602, refer to S502 in the foregoing method 500.

In a possible implementation, the step of configuring, by a network device, a resource for the first terminal device and/or a resource for the second terminal device includes S603 to S605.

S603: The first terminal device sends third indication information to the network device.

Correspondingly, the network device receives the third indication information from the first terminal device.

For more descriptions of S603, refer to S503 in the foregoing method 500.

S604: The network device sends fifth indication information to the second terminal device.

Correspondingly, the second terminal device receives the fifth indication information from the network device.

S605: The network device sends fourth indication information to the first terminal device.

Correspondingly, the first terminal device receives the fourth indication information from the network device.

For more descriptions of S605, refer to S505 in the foregoing method 500.

Further, one or more steps of S606 to S610 in the method 600 continue to be performed.

S606: The first terminal device sends a first TB to the second terminal device.

For more descriptions of S606, refer to S410 in the foregoing method 400.

Optionally, the method 600 further includes S607.

S607: The second terminal device sends first feedback information to the first terminal device.

Correspondingly, the first terminal device receives the first feedback information from the second terminal device.

The first feedback information indicates at least one of the following: a status of receiving the first TB by the second terminal device, quality information of a channel between the first terminal device and the second terminal device, or whether the first terminal device sends a second TB to the network device. For example, the first feedback information is a HARQ feedback for the first TB, and the second terminal device sends the HARQ feedback for the first TB to the first terminal device through a PSFCH.

For the status of receiving the first TB by the second terminal device, refer to the foregoing descriptions in S508. For the quality information of the channel between the first terminal device and the second terminal device, refer to the foregoing descriptions in S508.

If the second terminal device correctly receives the first TB, the first feedback information may indicate the first terminal device not to send the second TB to the network device. If the second terminal device does not correctly receive the first TB, and/or quality of the channel between the first terminal device and the second terminal device is lower than a first threshold, the first feedback information may indicate the first terminal device to send the second TB to the network device.

In a possible implementation, if the second terminal device does not receive the first TB from the first terminal device, in other words, the second terminal device does not sense that the first terminal device sends the first TB to the second terminal device, the second terminal device does not send the first feedback information to the first terminal device.

Optionally, the second terminal device may further send second feedback information to the network device. For more descriptions of the second feedback information, refer to S508 in the foregoing method 500.

S608: The first terminal device sends the second TB to the network device.

Correspondingly, the network device receives the second TB from the first terminal device.

For more descriptions of the second TB, refer to S420 in the foregoing method 400.

In a possible implementation, after generating the second TB, the first terminal device sends the second TB to the network device.

In another possible implementation, when a first condition is met, the first terminal device sends the second TB to the network device; in other words, when a first condition is met, the first terminal device generates the second TB and sends the second TB to the network device. The first condition includes one or more of the following: The first terminal device does not correctly receive the first feedback information; the first feedback information indicates that the second terminal device does not correctly receive the first TB; the first feedback information indicates that the quality of the channel between the first terminal device and the second terminal device is lower than the first threshold; or the first feedback information indicates the first terminal device to send the second TB to the network device.

That the first terminal device does not correctly receive the first feedback information means that the first terminal device does not receive the first feedback information, or the first terminal device receives the first feedback information but does not correctly parse the first feedback information.

After the first terminal device receives the first feedback information, when the first terminal device determines, based on the first feedback information, that the first feedback information indicates one or more of the foregoing items, the first feedback information may indicate more items, but the first terminal device parses out some items indicated by the first feedback information, instead of all the items indicated by the first feedback information. For example, the first feedback information sent by the second terminal device indicates the following plurality of items: the receiving status of the first TB and the quality information of the channel between the first terminal device and the second terminal device. After receiving the first feedback information, the first terminal device may parse out the receiving status of the first TB from the first feedback information, but does not parse out the quality information of the channel between the first terminal device and the second terminal device.

It may be understood that if the first terminal device determines, based on the first feedback information, that the first condition is not met, the first terminal device does not send the second TB to the network device. The first terminal device determines, based on the first feedback information, that the first condition is not met, when the first feedback information indicates at least one of the following: The first feedback information indicates that the second terminal device correctly receives the first TB, the first feedback information indicates that the quality of the channel between the first terminal device and the second terminal device is not lower than the first threshold, or the first feedback information indicates the first terminal device not to send the second TB to the network device.

Optionally, the method 600 further includes S609.

S609: The first terminal device sends first indication information to the network device.

Correspondingly, the network device receives the first indication information from the first terminal device.

If the first terminal device sends the second TB to the network device before receiving the first feedback information, or before determining that the first feedback information is not correctly received, the first terminal device may send the first indication information to the network device based on the first feedback information after receiving the first feedback information; or when determining that the first feedback information is not correctly received, the first terminal device sends the first indication information to the network device. The first indication information indicates whether the network device sends an RLC PDU in a first RLC PDU set to the second terminal device, the first indication information indicates whether the second terminal device correctly receives the first TB, or the first indication information indicates whether the quality of the channel between the first terminal device and the second terminal device is lower than the first threshold.

For example, if one or more of the following are met: the first feedback information indicates that the second terminal device does not correctly receive the first TB, the first feedback information indicates that the quality of the channel between the first terminal device and the second terminal device is lower than the first threshold, the first feedback information indicates the first terminal device to send the second TB to the network device, or the first terminal device does not correctly receive the first feedback information, the first indication information sent by the first terminal device to the network device indicates the network device to send the RLC PDU in the first RLC PDU set to the second terminal device, the first indication information indicates that the second terminal device does not correctly receive the first TB, or the first indication information indicates that the quality of the channel between the first terminal device and the second terminal device is lower than the first threshold.

For example, if one or more of the following are met: the first feedback information indicates that the second terminal device correctly receives the first TB, the first feedback information indicates that the quality of the channel between the first terminal device and the second terminal device is not lower than the first threshold, and the first feedback information indicates the first terminal device not to send the second TB to the network device, the first indication information sent by the first terminal device to the network device indicates the network device not to send the RLC PDU in the first RLC PDU set to the second terminal device, the first indication information indicates that the second terminal device correctly receives the first TB, or the first indication information indicates that the quality of the channel between the first terminal device and the second terminal device is not lower than the first threshold.

Optionally, the method 600 further includes S610.

S610: The network device sends a third TB to the second terminal device.

Correspondingly, the second terminal device receives the third TB from the network device.

For more descriptions of the third TB, refer to S509 in the foregoing method 500.

After receiving the third TB, the second terminal device sends or transfers the RLC PDU in the first RLC PDU set to a PC5 RLC entity through a Uu MAC entity.

Optionally, in addition to receiving the third TB from the network device, the second terminal device further receives, from the network device, control information for scheduling the third TB. For example, the control information is carried in DCI, the control information for scheduling the third TB includes indication information #2, and the indication information #2 indicates to the second terminal device that the third TB includes the RLC PDU in the first RLC PDU set. The second terminal device may determine, based on the indication information #2, to send or transfer the RLC PDU in the first RLC PDU set to the PC5 RLC entity through the Uu MAC entity. Alternatively, the second terminal device may determine, based on one or more of the following carried in a Uu MAC header or a Uu ADAPT header, to send or transfer the RLC PDU in the first RLC PDU set to the PC5 RLC entity through the Uu MAC entity: all or some bits of a source ID corresponding to data sent by the first terminal device to the second terminal device, all or some bits of a target ID corresponding to the data sent by the first terminal device to the second terminal device, an LCID included in a second logical channel set, and an ID of a radio bearer to which a first resource and a second resource are bound or mapped.

In a possible implementation, if the first indication information indicates the network device to send the RLC PDU in the first RLC PDU set to the second terminal device, the first indication information indicates that the second terminal device does not correctly receive the first TB, or the first indication information indicates that the quality of the channel between the first terminal device and the second terminal device is lower than the first threshold, the network device sends the third TB to the second terminal device.

It may be understood that if the first indication information indicates the network device not to send the RLC PDU in the first RLC PDU set to the second terminal device, the first indication information indicates that the second terminal device correctly receives the first TB, or the first indication information indicates that the quality of the channel between the first terminal device and the second terminal device is not lower than the first threshold, the network device does not send the third TB to the second terminal device. Optionally, the network device may alternatively discard the RLC PDU in the first RLC PDU set.

In a possible implementation, when determining that a third condition is met, the network device sends the third TB to the second terminal device. For more descriptions of the third condition, refer to S509 in the foregoing method 500.

In a possible implementation, if the network device determines that the third condition is met, and the first indication information indicates the network device to send the RLC PDU in the first RLC PDU set to the second terminal device, the first indication information indicates that the second terminal device does not correctly receive the first TB, or the first indication information indicates that the quality of the channel between the first terminal device and the second terminal device is lower than the first threshold, the network device sends the third TB to the second terminal device.

In embodiments of this application, the first TB sent by the first terminal device to the second terminal device and the second TB sent by the first terminal device to the network device correspond to the same first RLC PDU set. Therefore, after receiving the first feedback information from the second terminal device, the first terminal device may send the first indication information to the network device based on the first feedback information, to indicate the network device to send the RLC PDU in the first RLC PDU set to the second terminal device, or indicate the network device not to send the RLC PDU in the first RLC PDU set to the second terminal device. In comparison with a manner in which the network device directly sends the RLC PDU in the first RLC PDU set to the second terminal device, the method provided in this application helps reduce resource consumption while ensuring transmission reliability. For example, if the first feedback information indicates that the second terminal device correctly receives the first TB, the first terminal device sends the first indication information to the network device, to indicate the network device not to send the RLC PDU in the first RLC PDU set to the second terminal device, thereby reducing resource consumption.

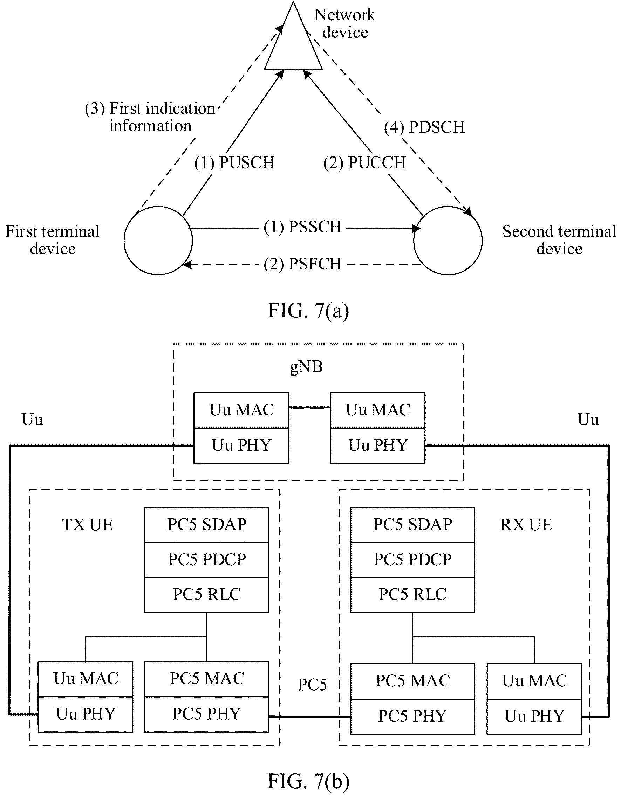

Based on the method 500 and the method 600, FIG. 7(a) is a flowchart of communication between the first terminal device, the second terminal device, and the network device, and FIG. 7(b) to FIG. 7(e) are diagrams of protocol stacks of the first terminal device, the second terminal device, and the network device.

As shown in FIG. 7(a), the first terminal device may send a first TB to the network device through a PUSCH, and send a second TB to the second terminal device through a PSSCH. Then, the second terminal device may send first feedback information to the first terminal device through the PSFCH, and/or send second feedback information to the network device through a PUCCH. If the first terminal device receives the first feedback information, the first terminal device may send first indication information to the network device based on the first feedback information, to indicate the network device whether to send an RLC PDU in a first RLC PDU set to the second terminal device. If the network device receives the second feedback information, the network device may determine, based on the second feedback information, whether to send the RLC PDU in the first RLC PDU set to the second terminal device. If the network device determines to send the RLC PDU in the first RLC PDU set to the second terminal device, the network device may send a third TB to the second terminal device through a PDSCH.

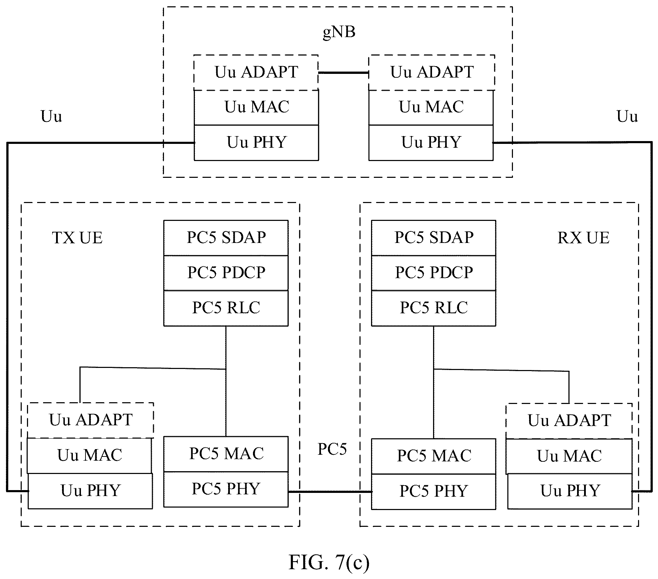

FIG. 7(b) and FIG. 7(c) are diagrams of user plane protocol stacks of the first terminal device, the second terminal device, and the network device.

As shown in FIG. 7(b), the first terminal device may send at least one PC5 RLC PDU to the second terminal device through a PC5 protocol stack. The PC5 protocol stack includes a PC5 MAC layer and a PC5 PHY. The first terminal device may further send at least one PC5 RLC PDU to the network device through a Uu protocol stack. After receiving the at least one PC5 RLC PDU, an uplink MAC layer of the network device forwards the at least one PC5 RLC PDU to a downlink MAC layer, and then the at least one PC5 RLC PDU is sent to the second terminal device through a Uu MAC layer and a Uu PHY. The second terminal device receives the at least one PC5 RLC PDU from the first terminal device through a PC5 MAC layer, and/or receives the at least one PC5 RLC PDU from the network device through a Uu MAC layer. When receiving the at least one PC5 RLC PDU from the network device through the Uu MAC layer, the second terminal device sends the at least one PC5 RLC PDU to a PC5 RLC layer through the Uu MAC layer.

Optionally, as shown in FIG. 7(c), the network device may further include Uu ADAPT layers. The ADAPT layer may alternatively have another name. This is not limited in this application. In this case, the network device forwards the at least one PC5 RLC PDU to a downlink Uu ADAPT layer through an uplink Uu ADAPT layer, and then sends the at least one PC5 RLC PDU to the second terminal device through the Uu MAC layer and the Uu PHY. If the network device includes the Uu ADAPT layers, a Uu ADAPT header of the third TB sent by the network device carries one or more of the following: all or some bits of a source ID corresponding to data sent by the first terminal device to the second terminal device, all or some bits of a target ID corresponding to the data sent by the first terminal device to the second terminal device, an LCID included in a second logical channel set, and an ID of a radio bearer to which a first resource and a second resource are bound or mapped. If the network device does not include the Uu ADAPT layers, a Uu MAC header of the third TB sent by the network device carries one or more of the following: all or some bits of a source ID corresponding to data sent by the first terminal device to the second terminal device, all or some bits of a target ID corresponding to the data sent by the first terminal device to the second terminal device, an LCID included in a second logical channel set, and an ID of a radio bearer to which a first resource and a second resource are bound or mapped.

Optionally, as shown in FIG. 7(c), the first terminal device may further include a Uu ADAPT layer. In this case, the first terminal device transfers the at least one PC5 RLC PDU to the Uu ADAPT layer through a PC5 RLC layer, and then sends the at least one PC5 RLC PDU from the Uu ADAPT layer to the network device through a Uu MAC layer and a Uu PHY. The second terminal device may further include a Uu ADAPT layer. In this case, the second terminal device transfers the at least one PC5 RLC PDU to the PC5 RLC layer through the Uu ADAPT layer.

It should be noted that the diagrams of the user plane protocol stacks shown in FIG. 7(b) and FIG. 7(c) are merely used as examples, and should not constitute any limitation on embodiments of this application. For example, another protocol layer may be further included between the PC5 RLC layer and the PC5 MAC layer of the first terminal device and/or the second terminal device. One or more of a Uu RLC layer, a Uu PDCP layer, and a Uu SDAP layer may be further included above the Uu MAC layer or the Uu ADAPT layer of the network device. One or more of a Uu RLC layer, a Uu PDCP layer, and a Uu SDAP layer may be further included above the Uu MAC layer or the Uu ADAPT layer of the first terminal device and/or the second terminal device.

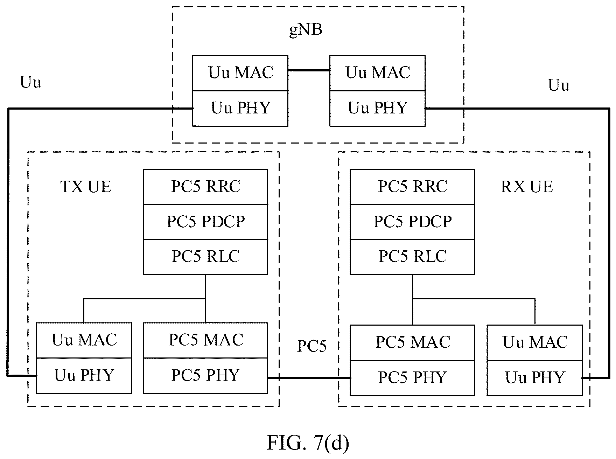

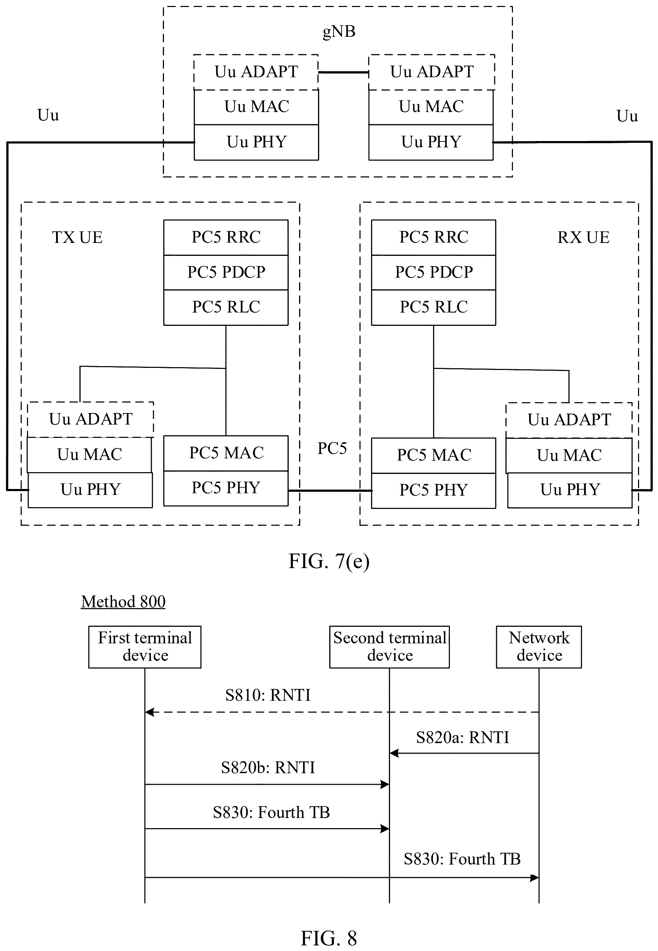

FIG. 7(d) and FIG. 7(e) are diagrams of control plane protocol stacks of the first terminal device, the second terminal device, and the network device. As shown in FIG. 7(d), the first terminal device, the second terminal device, and the network device may include a Uu MAC layer and a Uu PHY, and the first terminal device and the second terminal device may further include a Uu RLC layer, a Uu PDCP layer, and a Uu RRC layer. Optionally, as shown in FIG. 7(e), the first terminal device, the second terminal device, and the network device may further include a Uu ADAPT layer. Optionally, the first terminal device, the second terminal device, and the network device may further include one or more of a Uu RLC layer, a Uu PDCP layer, and a Uu RRC layer.

FIG. 8 is a schematic flowchart of a data transmission method 800 according to an embodiment of this application. As shown in FIG. 8, the method 800 may include the following steps.

S810: A network device sends an RNTI to a first terminal device.

Correspondingly, the first terminal device receives the RNTI from the network device.

The RNTI is used by the first terminal device to scramble a fourth TB. Correspondingly, the RNTI is used by the network device and a second terminal device to decode the fourth TB.

The RNTI is not limited in embodiments of this application. For example, the RNTI is an RNTI corresponding to the first terminal device. For example, the RNTI is a cell RNTI (cell-RNTI, C-RNTI) configured by the network device for the first terminal device. For another example, the RNTI is an RNTI corresponding to the first terminal device and the second terminal device. For example, the RNTI is a group RNTI (group-RNTI, G-RNTI) configured by the network device for a terminal device group to which the first terminal device and the second terminal device belong. For another example, the RNTI is an RNTI that is configured by the network device for the first terminal device and the second terminal device and that corresponds only to the first terminal device and the second terminal device.

It should be noted that S810 is an optional step. For example, if the RNTI is the RNTI corresponding to the first terminal device, and before the method 800 is performed, the network device configures the RNTI corresponding to the first terminal device for the first terminal device, S810 in the method 800 may not be performed.

Further, S820a and/or S820b in the method 800 are/is performed.

S820a: The network device sends the RNTI to the second terminal device.

Correspondingly, the second terminal device receives the RNTI from the network device.

For descriptions of the RNTI, refer to S810.

It should be noted that S810 and S820a are same steps. For example, the network device may send the RNTI to the first terminal device and the second terminal device in a multicast or broadcast manner. S810 and S820a may be different steps. For example, the network device may separately send the RNTI to the first terminal device and the second terminal device in a unicast manner. When S810 and S820a are different steps, S810 may be performed before S820a, or S810 may be performed after S820a.

S820b: The first terminal device sends the RNTI to the second terminal device.

Correspondingly, the second terminal device receives the RNTI from the first terminal device.

For descriptions of the RNTI, refer to S810.

In a possible implementation, if the RNTI is the RNTI corresponding to the first terminal device, and the network device previously configures the RNTI corresponding to the first terminal device for the first terminal device, the first terminal device may send the RNTI to the second terminal device.

In another possible implementation, if the RNTI is the RNTI corresponding to the first terminal device and the second terminal device, after the first terminal device receives the RNTI from the network device, the first terminal device may send the RNTI to the second terminal device.

S830: The first terminal device sends the fourth TB to the second terminal device, and the first terminal device sends the fourth TB to the network device.

Optionally, the fourth TB includes at least one PC5 PDCP PDU, or the fourth TB includes at least one PC5 RLC PDU. This is not limited in this application.

For example, the first terminal device sends the fourth TB to the second terminal device and the network device on a fourth resource. For example, the first terminal device may send the fourth TB to the second terminal device and the network device on the fourth resource through a Uu protocol stack. It may be understood that in a process in which the first terminal device sends the fourth TB to the second terminal device and the network device on the fourth resource, the fourth resource is an uplink resource for the first terminal device, and the fourth resource is a downlink resource for the second terminal device. In other words, the first terminal device sends the fourth TB on the fourth resource through a PUSCH. Correspondingly, the network device receives the fourth TB on the fourth resource through the PUSCH, and the second terminal device receives the fourth TB on the fourth resource through a PDSCH, in other words, the second terminal device receives the fourth TB on the fourth resource by using the PUSCH corresponding to the fourth TB as the PDSCH.

It should be understood that, optionally, to enable the second terminal device to receive the fourth TB sent by the first terminal device through the PUSCH, when the first terminal device sends the fourth TB on the fourth resource, a cyclic prefixed orthogonal frequency division multiplexing (cyclic prefixed orthogonal frequency division multiplexing, CP-OFDM) mode and an uplink-downlink symmetric demodulation reference signal (demodulation reference signal, DMRS) mode are used.

After receiving the fourth TB from the first terminal device, the network device may decode the fourth TB based on the RNTI described above.

After receiving the fourth TB from the first terminal device, the second terminal device may decode the fourth TB based on the RNTI described above.

In embodiments of this application, the first terminal device and/or the network device send/sends, to the second terminal device, the RNTI corresponding to the first terminal device or the RNTI corresponding to the first terminal device and the second terminal device. Therefore, after the first terminal device sends the fourth TB to the network device and the second terminal device on the fourth resource, the second terminal device and the network device may decode the fourth TB based on the received RNTI, so that the first terminal device can send a same TB to both the second terminal device and the network device.

When the first terminal device sends the same fourth TB to the second terminal device and the network device, this helps the first terminal device and/or the network device determine, based on a HARQ feedback of the second terminal device for the fourth TB, whether the network device sends an RLC PDU included in the fourth TB to the second terminal device. For example, if the HARQ feedback of the second terminal device for the fourth TB indicates that the second terminal device correctly receives the fourth TB, the first terminal device and/or the network device determine/determines that the network device does not send the RLC PDU included in the fourth TB to the second terminal device, thereby reducing resource consumption.

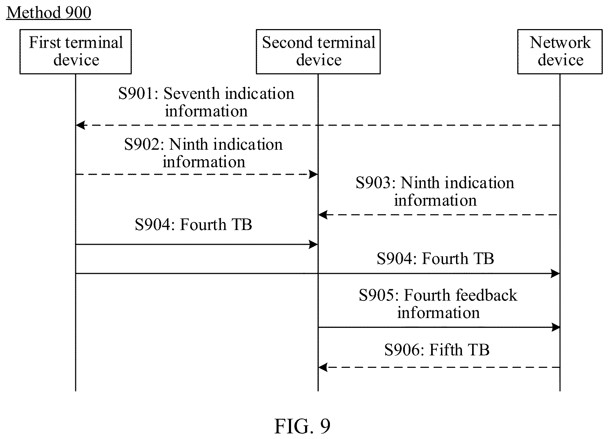

Based on the descriptions of the method 800, the following describes, with reference to FIG. 9, how the network device determines, based on the HARQ feedback of the second terminal device for the fourth TB, whether the network device sends the RLC PDU included in the fourth TB to the second terminal device.

FIG. 9 is a schematic flowchart of a data transmission method 900 according to an embodiment of this application. As shown in FIG. 9, the method 900 may include the following steps.

In a possible implementation, before the method 900 is performed, if a first terminal device and/or a second terminal device do/does not determine a resource used for transmission of data or feedback information, the method 900 further includes a step of configuring, by a network device, a resource for the first terminal device and/or a resource for the second terminal device.

The following describes the step of configuring, by a network device, a resource for the first terminal device and/or a resource for the second terminal device.

In a possible implementation, the step of configuring, by a network device, a resource for the first terminal device and/or a resource for the second terminal device includes S901 and S903.

S901: The network device sends seventh indication information to the first terminal device.

Correspondingly, the first terminal device receives the seventh indication information from the network device.

The seventh indication information indicates at least one of the following: time-domain resource position information and/or frequency-domain resource position information of a fourth resource; time-domain resource position information and/or frequency-domain resource position information of a fifth resource; or time-domain resource position information and/or frequency-domain resource position information of a sixth resource.

The fourth resource is used by the first terminal device to send a fourth TB to the network device and the second terminal device; in other words, the fourth resource is used by the network device to receive the fourth TB from the first terminal device, and is used by the second terminal device to receive the fourth TB from the first terminal device. For descriptions of the fourth TB, refer to S830. The time-domain resource position information of the fourth resource may include one or more of the following: a TRIV corresponding to the fourth resource, an index of a time-domain unit included in the fourth resource, an index of a start time-domain unit included in the fourth resource, a quantity of time-domain units included in the fourth resource, or time-domain unit frequency shift information of the time-domain unit included in the fourth resource relative to a time-domain unit in which the seventh indication information is located. For more descriptions of the time-domain unit, refer to S501 in the foregoing method 500. The frequency-domain resource position information of the fourth resource may include one or more of the following: an FRIV corresponding to the fourth resource, an index of a frequency-domain unit included in the fourth resource, an index of a start frequency-domain unit included in the fourth resource, or a quantity of frequency-domain units included in the fourth resource. For more descriptions of the frequency-domain unit, refer to S501 in the foregoing method 500. If the fourth resource is a preconfigured resource, the seventh indication information may not indicate the time-domain resource position information and/or the frequency-domain resource position information of the fourth resource.

For more descriptions of the fourth resource, refer to the descriptions of the first resource and/or the second resource in S501 in the foregoing method 500.

The fifth resource is used by the second terminal device to send fourth feedback information to the network device. For more descriptions of the fourth feedback information, refer to the following S905. The time-domain resource position information of the fifth resource may include one or more of the following: a TRIV corresponding to the fifth resource, an index of a time-domain unit included in the fifth resource, an index of a start time-domain unit included in the fifth resource, a quantity of time-domain units included in the fifth resource, or time-domain unit offset information of the time-domain unit included in the fifth resource relative to the time-domain unit included in the fourth resource. A time-domain position of the fifth resource is after a time-domain position of the fourth resource. The frequency-domain resource position information of the fifth resource may include one or more of the following: an FRIV corresponding to the fifth resource, an index of a frequency-domain unit included in the fifth resource, an index of a start frequency-domain unit included in the fifth resource, a quantity of frequency-domain units included in the fifth resource, or frequency-domain unit offset information of the frequency-domain unit included in the fifth resource relative to the frequency-domain unit included in the fourth resource. The fifth resource is the resource used by the second terminal device to send the fourth feedback information to the network device. If the first terminal device does not need to know information about the fifth resource, the seventh indication information may not indicate the time-domain resource position information and/or the frequency-domain resource position information of the fifth resource.

For more descriptions of the fifth resource, refer to the descriptions of the third resource in S501 in the foregoing method 500.

The sixth resource is used by the first terminal device to send sixth indication information to the network device, where the sixth indication information indicates whether the network device sends an RLC PDU included in the fourth TB to the second terminal device. The time-domain resource position information of the sixth resource may include one or more of the following: a TRIV corresponding to the sixth resource, an index of a time-domain unit included in the sixth resource, an index of a start time-domain unit included in the sixth resource, a quantity of time-domain units included in the sixth resource, or time-domain unit offset information of the time-domain unit included in the sixth resource relative to the time-domain unit included in the fourth resource. A time-domain position of the sixth resource is after the time-domain position of the fourth resource. The frequency-domain resource position information of the sixth resource may include one or more of the following: an FRIV corresponding to the sixth resource, an index of a frequency-domain unit included in the sixth resource, an index of a start frequency-domain unit included in the sixth resource, a quantity of frequency-domain units included in the sixth resource, or frequency-domain unit offset information of the frequency-domain unit included in the sixth resource relative to the frequency-domain unit included in the fourth resource. If the sixth resource is a preconfigured resource, the seventh indication information may not indicate the time-domain resource position information and/or the frequency-domain resource position information of the sixth resource.

Optionally, the method 900 further includes: The network device sends eighth indication information to the first terminal device, where the eighth indication information indicates at least one of the following: The first terminal device sends the fourth TB to the network device and the second terminal device on the fourth resource; and the second terminal device receives the fourth TB from the first terminal device on the fourth resource. In other words, the eighth indication information indicates at least one of the following: The first terminal device performs uplink sending on the fourth resource; or the second terminal device performs downlink reception on the fourth resource.

For example, in a TDD mode, the network device may configure TDD slot configuration information for the first terminal device and the second terminal device, for configuring a downlink slot or symbol used for downlink reception, and configuring an uplink slot or symbol used for uplink transmission; or configuring a flexible (flexible) slot or symbol. In the flexible slot or on the flexible symbol, the first terminal device and/or the second terminal device may determine, based on an indication of the network device, to perform downlink reception or uplink transmission. The fourth resource configured by the network device may be located in an uplink slot or an uplink symbol, so that the network device may send the eighth indication information to the first terminal device, to indicate the first terminal device to perform uplink transmission in the uplink slot or on the uplink symbol, and/or indicate the second terminal device to perform downlink reception in the uplink slot or on the uplink symbol. Alternatively, the fourth resource configured by the network device may be located in a flexible slot or on a flexible symbol, so that the network device may send the eighth indication information to the first terminal device, to indicate the first terminal device to perform uplink transmission in the flexible slot or on the flexible symbol, and/or indicate the second terminal device to perform downlink reception in the flexible slot or on the flexible symbol.

S903: The network device sends ninth indication information to the second terminal device.

Correspondingly, the second terminal device receives the ninth indication information from the network device.

The ninth indication information indicates at least one of the following: the time-domain resource position information and/or the frequency-domain resource position information of the fourth resource; the time-domain resource position information and/or the frequency-domain resource position information of the fifth resource; or the time-domain resource position information and/or the frequency-domain resource position information of the sixth resource.

For more descriptions of the ninth indication information, refer to the foregoing descriptions of the seventh indication information in S901.

For example, the sixth resource is the resource used by the first terminal device to send the sixth indication information, and the second terminal device may not know information about the sixth resource. Therefore, in some implementations, the ninth indication information may not indicate the time-domain resource position information and/or the frequency-domain resource position information of the sixth resource.

S901 and S903 may be a same step or different steps. For example, the network device may send indication information to the first terminal device and the second terminal device in a multicast or broadcast manner. In this case, the seventh indication information sent by the network device to the first terminal device is the same as the ninth indication information sent by the network device to the second terminal device. For another example, the network device may separately send the seventh indication information to the first terminal device and the ninth indication information to the second terminal device in a unicast manner. In this case, the seventh indication information sent by the network device to the first terminal device is the same as or different from the ninth indication information sent by the network device to the second terminal device. For example, the seventh indication information sent by the network device to the first terminal device indicates information related to the fourth resource and information related to the sixth resource, and the ninth indication information sent by the network device to the second terminal device indicates the information related to the fourth resource and information related to the fifth resource. When S901 and S903 are different steps, S901 may be performed before S903, or may be performed after S903.

Optionally, the method 900 further includes: The first terminal device and/or the network device send/sends tenth indication information to the second terminal device.

The tenth indication information indicates at least one of the following: The first terminal device sends the fourth TB to the network device and the second terminal device on the fourth resource; and the second terminal device receives the fourth TB from the first terminal device on the fourth resource. For more descriptions of the tenth indication information, refer to the foregoing descriptions of the eighth indication information.

For example, if the first terminal device receives the eighth indication information from the network device, the first terminal device may send the tenth indication information to the second terminal device based on the eighth indication information. The tenth indication information sent by the first terminal device to the second terminal device is the same as or different from the eighth indication information. For example, the eighth indication information indicates the following plurality of items: The first terminal device sends the fourth TB to the network device and the second terminal device on the fourth resource; and the second terminal device receives the fourth TB from the first terminal device on the fourth resource. The tenth indication information sent by the first terminal device indicates the second terminal device to receive the fourth TB from the first terminal device on the fourth resource.

For example, the eighth indication information sent by the network device to the first terminal device is the same as or different from the tenth indication information sent by the network device to the second terminal device. For example, the network device may send the eighth indication information to the first terminal device, and send the tenth indication information to the second terminal device in a broadcast manner, where the eighth indication information is the same as the tenth indication information. For another example, the network device may separately send the eighth indication information to the first terminal device, and send the tenth indication information to the second terminal device in a unicast manner. The eighth indication information indicates the first terminal device to send the fourth TB to the network device and the second terminal device on the fourth resource, and the tenth indication information indicates the second terminal device to receive the fourth TB from the first terminal device on the fourth resource.

In a possible implementation, the step of configuring, by a network device, a resource for the first terminal device and/or a resource for the second terminal device includes S901 and S902.

S901: The network device sends seventh indication information to the first terminal device.

Correspondingly, the first terminal device receives the seventh indication information from the network device.

Optionally, the method 900 further includes: The network device sends eighth indication information to the first terminal device.

S902: The first terminal device sends ninth indication information to the second terminal device.

Correspondingly, the second terminal device receives the ninth indication information from the first terminal device.

The ninth indication information indicates at least one of the following: time-domain resource position information and/or frequency-domain resource position information of a fourth resource; time-domain resource position information and/or frequency-domain resource position information of a fifth resource; or time-domain resource position information and/or frequency-domain resource position information of a sixth resource.

After receiving the seventh indication information from the network device, the first terminal device may send the ninth indication information to the second terminal device based on the seventh indication information.

For example, content indicated by the seventh indication information sent by the first terminal device is the same as content indicated by the ninth indication information. For example, both the seventh indication information and the ninth indication information indicate the following plurality of items: the time-domain resource position information and/or the frequency-domain resource position information of the fourth resource, the time-domain resource position information and/or the frequency-domain resource position information of the fifth resource, and the time-domain resource position information and/or the frequency-domain resource position information of the sixth resource.

For example, content indicated by the seventh indication information sent by the first terminal device is different from content indicated by the ninth indication information. For example, the seventh indication information indicates the following plurality of items: the time-domain resource position information and/or the frequency-domain resource position information of the fourth resource, the time-domain resource position information and/or the frequency-domain resource position information of the fifth resource, and the time-domain resource position information and/or the frequency-domain resource position information of the sixth resource. The ninth indication information indicates the following plurality of items: the time-domain resource position information and/or the frequency-domain resource position information of the fourth resource, and the time-domain resource position information and/or the frequency-domain resource position information of the fifth resource.

Optionally, the method 900 further includes: The first terminal device sends tenth indication information to the second terminal device.

Further, S904 to S906 in the method 900 continue to be performed.

S904: The first terminal device sends a fourth TB to the network device, and the first terminal device sends the fourth TB to the second terminal device.

For more descriptions of S904, refer to S830 in the foregoing method 800.

S905: The second terminal device sends fourth feedback information to the network device.

Correspondingly, the network device receives the fourth feedback information from the second terminal device.

For example, the second terminal device sends the fourth feedback information to the network device on the fifth resource through an uplink.

The fourth feedback information indicates at least one of the following: a status of receiving the fourth TB by the second terminal device, quality information of a channel between the first terminal device and the second terminal device, or whether the network device sends an RLC PDU included in the fourth TB to the second terminal device. For example, the fourth feedback information is a HARQ feedback for the fourth TB, and the second terminal device sends the HARQ feedback for the fourth TB to the network device on the fifth resource through a PUCCH.

The status of receiving the fourth TB by the second terminal device includes: The second terminal device correctly receives the fourth TB, or the second terminal device does not correctly receive the fourth TB. That the second terminal device correctly receives the fourth TB means that the second terminal device receives the fourth TB and correctly decodes the fourth TB. That the second terminal device does not correctly receive the fourth TB means that the second terminal device does not receive the fourth TB, and/or the second terminal device does not correctly decode the fourth TB. That the second terminal device correctly decodes the fourth TB means that the second terminal device correctly decodes all CBs included in the fourth TB. That the second terminal device does not correctly decode the fourth TB means that the second terminal device correctly decodes no CBs included in the fourth TB or does not correctly decode some CBs included in the fourth TB. For example, information indicating the status of receiving the fourth TB by the second terminal device is ACK information or NACK information, where the ACK information indicates that the second terminal device correctly receives the fourth TB, and the NACK information indicates that the second terminal device does not correctly receive the fourth TB.

For the quality information of the channel between the first terminal device and the second terminal device, refer to the descriptions in S508 of the method 500.

If the second terminal device correctly receives the fourth TB, the fourth feedback information may indicate the network device not to send the RLC PDU included in the fourth TB to the second terminal device. If the second terminal device does not correctly receive the fourth TB, and/or quality of the channel between the first terminal device and the second terminal device is lower than a first threshold, the fourth feedback information may indicate the network device to send the RLC PDU included in the fourth TB to the second terminal device.

Optionally, the second terminal device may further send third feedback information to the first terminal device. For more descriptions of the third feedback information, refer to S1005 in the following method 1000.

Correspondingly, after receiving the third feedback information, the first terminal device may further send sixth indication information to the network device based on the third feedback information, where the sixth indication information indicates whether the network device sends the RLC PDU included in the fourth TB to the second terminal device. For a manner in which the first terminal device sends the sixth indication information to the network device based on the third feedback information, refer to S 1006 in the following method 1000.

Optionally, the method 900 further includes S906.

S906: The network device sends a fifth TB to the second terminal device.

Correspondingly, the second terminal device receives the fifth TB from the network device.

The fifth TB is generated by the network device based on the RLC PDU included in the fourth TB, and the fifth TB includes one or more TBs. This is not limited in embodiments of this application.

Optionally, the fifth TB further includes an RLC PDU other than the RLC PDU included in the fourth TB. For example, the fourth TB includes an RLC PDU #a and an RLC PDU #b, and the fifth TB includes the RLC PDU #a, the RLC PDU #b, and an RLC PDU #c, where the RLC PDU #c is different from the RLC PDU #a and the RLC PDU #b.

In a possible implementation, when determining, based on the fourth feedback information, that a fifth condition is met, the network device sends the fifth TB to the second terminal device. The fifth condition includes one or more of the following: The fourth feedback information indicates that the second terminal device does not correctly receive the fourth TB; the fourth feedback information indicates that the quality of the channel between the first terminal device and the second terminal device is lower than the first threshold; or the fourth feedback information indicates the network device to send the RLC PDU included in the fourth TB to the second terminal device. That the fourth feedback information indicates that the quality of the channel between the first terminal device and the second terminal device is lower than the first threshold may be that the fourth feedback information directly indicates that the quality of the channel between the first terminal device and the second terminal device is lower than the first threshold; or the network device determines, based on the quality information that is of the channel between the first terminal device and the second terminal device and that is indicated by the fourth feedback information, that the quality of the channel between the first terminal device and the second terminal device is lower than the first threshold.

It may be understood that if the network device determines, based on the fourth feedback information, that the fifth condition is not met, the network device does not send the fifth TB to the second terminal device. Optionally, the network device may alternatively discard the RLC PDU included in the fourth TB. The network device determines, based on the fourth feedback information, that a second condition is not met, when the fourth feedback information indicates at least one of the following: The fourth feedback information indicates that the second terminal device correctly receives a first TB, the fourth feedback information indicates that the quality of the channel between the first terminal device and the second terminal device is not lower than the first threshold, or the fourth feedback information indicates the network device not to send the RLC PDU included in the fourth TB to the second terminal device.

Optionally, if the network device further receives the sixth indication information from the first terminal device, the fifth condition may further include one or more of the following: The sixth indication information indicates that the second terminal device does not correctly receive the first TB; the sixth indication information indicates that the quality of the channel between the first terminal device and the second terminal device is lower than the first threshold; or the sixth indication information indicates the network device to send the RLC PDU included in the fourth TB to the second terminal device.

In a possible implementation, when determining that a sixth condition is met, the network device sends the fifth TB to the second terminal device. The sixth condition is that at least one time-domain unit included in a third time-domain resource is before all time-domain units included in a fourth time-domain resource. The third time-domain resource is used by the network device to send an RLC PDU included in the fourth TB to the second terminal device, and the fourth time-domain resource is used by the first terminal device to retransmit an RLC PDU included in the fourth TB to the second terminal device.

It may be understood that when the sixth condition is met, the network device sends the fifth TB to the second terminal device, so that the second terminal device can receive the RLC PDU included in the fourth TB as early as possible. Therefore, a data transmission latency can be reduced.

Optionally, when the network device determines that the sixth condition is not met, the network device indicates the first terminal device to retransmit the RLC PDU included in the fourth TB to the second terminal device. For example, the network device sends indication information #3 to the first terminal device, where the indication information #3 indicates the first terminal device to retransmit the RLC PDU included in the fourth TB to the second terminal device, and/or the indication information #3 indicates the first terminal device to retransmit, to the second terminal device, time-domain resource position information and/or frequency-domain resource position information corresponding to the RLC PDU included in the fourth TB.

In a possible implementation, when determining that the fifth condition and the sixth condition are met, the network device sends the fifth TB to the second terminal device.

In embodiments of this application, the first terminal device sends the same fourth TB to the second terminal device and the network device, so that after receiving the fourth feedback information from the second terminal device, the network device may determine, based on the fourth feedback information, whether to send the RLC PDU included in the fourth TB to the second terminal device. In comparison with a manner in which the network device directly sends the RLC PDU included in the fourth TB to the second terminal device, the method provided in this application helps reduce resource consumption while ensuring transmission reliability. For example, if the fourth feedback information indicates that the second terminal device correctly receives the fourth TB, the network device does not send the RLC PDU included in the fourth TB to the second terminal device, thereby reducing resource consumption.

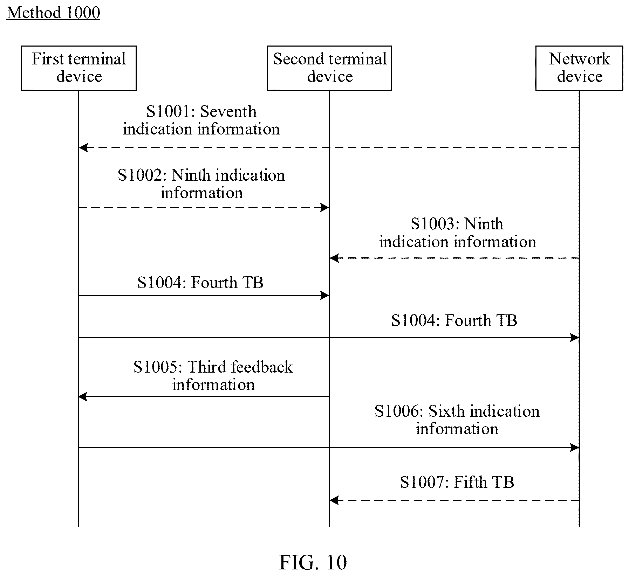

Based on the descriptions of the method 800, the following describes, with reference to FIG. 10, how the first terminal device determines, based on the HARQ feedback of the second terminal device for the fourth TB, whether the network device sends the RLC PDU included in the fourth TB to the second terminal device.

FIG. 10 is a schematic flowchart of a data transmission method 1000 according to an embodiment of this application. As shown in FIG. 10, the method 1000 may include the following steps.

In a possible implementation, before the method 1000 is performed, if a first terminal device and/or a second terminal device do/does not determine a resource used for transmission of data or feedback information, the method 1000 further includes a step of configuring, by a network device, a resource for the first terminal device and/or a resource for the second terminal device.

The following describes the step of configuring, by a network device, a resource for the first terminal device and/or a resource for the second terminal device.

In a possible implementation, the step of configuring, by a network device, a resource for the first terminal device and/or a resource for the second terminal device includes S1001 and S1003.

S1001: The network device sends seventh indication information to the first terminal device.

Correspondingly, the first terminal device receives the seventh indication information from the network device.

For more descriptions of S1001, refer to S901 in the foregoing method 900.

S1003: The network device sends ninth indication information to the second terminal device.

Correspondingly, the second terminal device receives the fifth indication information from the network device.

For more descriptions of S1003, refer to S903 in the foregoing method 900.

In a possible implementation, the step of configuring, by a network device, a resource for the first terminal device and/or a resource for the second terminal device includes S1001 and S1002.

S1001: The network device sends seventh indication information to the first terminal device.

Correspondingly, the first terminal device receives the seventh indication information from the network device.

For more descriptions of S1001, refer to S901 in the foregoing method 900.

S1002: The first terminal device sends ninth indication information to the second terminal device.

Correspondingly, the second terminal device receives the ninth indication information from the first terminal device.

For more descriptions of S1002, refer to S902 in the foregoing method 900.

Further, S1004 to S1007 in the method 1000 continue to be performed.

S1004: The first terminal device sends a fourth TB to the network device, and the first terminal device sends the fourth TB to the second terminal device.

For more descriptions of S1004, refer to S830 in the foregoing method 800.

S1005: The second terminal device sends third feedback information to the first terminal device.

Correspondingly, the first terminal device receives the third feedback information from the second terminal device.

The third feedback information indicates at least one of the following: a status of receiving the fourth TB by the second terminal device, or quality information of a channel between the first terminal device and the second terminal device. For example, the third feedback information is a HARQ feedback for the fourth TB, and the second terminal device sends the HARQ feedback for the fourth TB to the first terminal device through a PSFCH.

For the status of receiving the fourth TB by the second terminal device, refer to the foregoing descriptions in S905. For the quality information of the channel between the first terminal device and the second terminal device, refer to the foregoing description in S508 in the method 500.

In a possible implementation, if the second terminal device does not receive the fourth TB from the first terminal device, in other words, the second terminal device does not sense that the first terminal device sends the fourth TB to the second terminal device, the second terminal device does not send the third feedback information to the first terminal device.

Optionally, the second terminal device may further send fourth feedback information to the network device. For more descriptions of the fourth feedback information, refer to S905 in the foregoing method 900.

S1006: The first terminal device sends sixth indication information to the network device.

Correspondingly, the network device receives the sixth indication information from the first terminal device.

After receiving the third feedback information, the first terminal device may send the sixth indication information to the network device based on the third feedback information; or when determining that the third feedback information is not correctly received, the first terminal device sends the sixth indication information to the network device. The sixth indication information indicates whether the network device sends an RLC PDU included in the fourth TB to the second terminal device, the sixth indication information indicates whether the second terminal device correctly receives the fourth TB, or the sixth indication information indicates whether quality of the channel between the first terminal device and the second terminal device is lower than a first threshold.

For example, if a fourth condition is met, the sixth indication information sent by the first terminal device to the network device indicates the network device to send the RLC PDU included in the fourth TB to the second terminal device, indicates that the second terminal device does not correctly receive the fourth TB, or indicates that the quality of the channel between the first terminal device and the second terminal device is lower than the first threshold. The fourth condition includes one or more of the following: The third feedback information indicates that the second terminal device does not correctly receive the fourth TB, the third feedback information indicates that the quality of the channel between the first terminal device and the second terminal device is lower than the first threshold, or the first terminal device does not correctly receive the third feedback information.

For example, if one or more of the following are met: the third feedback information indicates that the second terminal device correctly receives the fourth TB, or the third feedback information indicates that the quality of the channel between the first terminal device and the second terminal device is not lower than the first threshold, the first indication information sent by the first terminal device to the network device indicates the network device not to send the RLC PDU included in the fourth TB to the second terminal device, indicates that the second terminal device correctly receives the fourth TB, or indicates that the quality of the channel between the first terminal device and the second terminal device is not lower than the first threshold.

Optionally, the method 1000 further includes S1007.

S1007: The network device sends a fifth TB to the second terminal device.

Correspondingly, the second terminal device receives the fifth TB from the network device.

For more descriptions of the fifth TB, refer to S906 in the foregoing method 900.

In a possible implementation, if the sixth indication information indicates the network device to send the RLC PDU included in the fourth TB to the second terminal device, indicates that the second terminal device does not correctly receive the fourth TB, or indicates that the quality of the channel between the first terminal device and the second terminal device is lower than the first threshold, the network device sends the fifth TB to the second terminal device.

It may be understood that if the sixth indication information indicates the network device not to send the RLC PDU included in the fourth TB to the second terminal device, indicates that the second terminal device correctly receives the fourth TB, or indicates that the quality of the channel between the first terminal device and the second terminal device is not lower than the first threshold, the network device does not send the fifth TB to the second terminal device. Optionally, the network device may alternatively discard the RLC PDU included in the fourth TB.

In a possible implementation, when determining that a sixth condition is met, the network device sends the fifth TB to the second terminal device. For more descriptions of the sixth condition, refer to S906 in the foregoing method 900.

In a possible implementation, if the network device determines that the sixth condition is met, and the sixth indication information indicates the network device to send the RLC PDU included in the fourth TB to the second terminal device, indicates that the second terminal device does not correctly receive the fourth TB, or indicates that the quality of the channel between the first terminal device and the second terminal device is lower than the first threshold, the network device sends the fifth TB to the second terminal device.

In embodiments of this application, the first terminal device sends the same fourth TB to the second terminal device and the network device, so that after receiving the third feedback information from the second terminal device, the first terminal device may send the sixth indication information to the network device based on the third feedback information, to indicate the network device to send the RLC PDU included in the fourth TB to the terminal device, or indicate the network device not to send the RLC PDU included in the fourth TB to the terminal device. In comparison with a manner in which the network device directly sends the RLC PDU included in the fourth TB to the second terminal device, the method provided in this application helps reduce resource consumption while ensuring transmission reliability. For example, if the third feedback information indicates that the second terminal device correctly receives the fourth TB, the first terminal device sends the sixth indication information to the network device, to indicate the network device not to send the RLC PDU included in the fourth TB to the second terminal device, thereby reducing resource consumption.

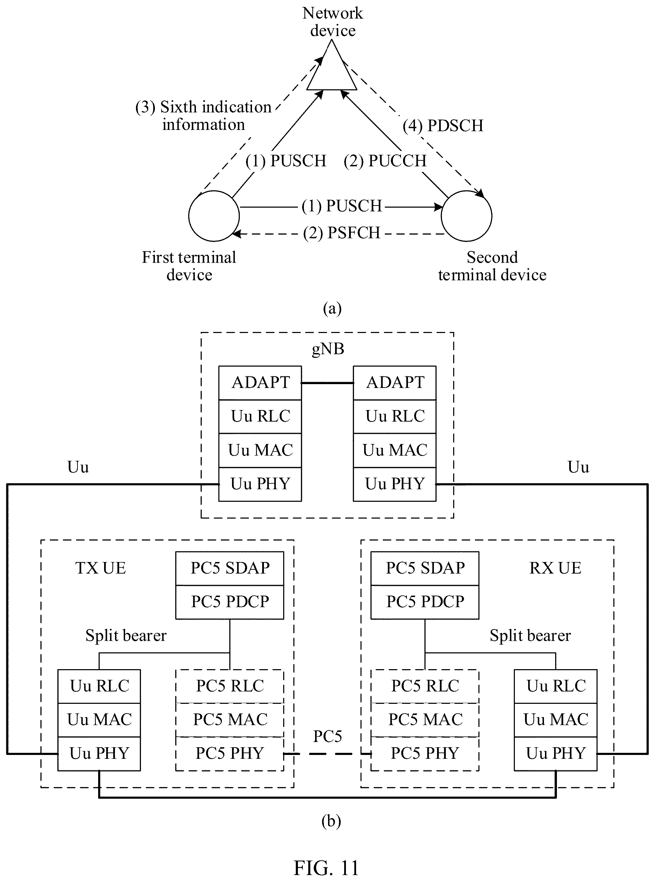

Based on the method 900 and the method 1000, FIG. 11 is a flowchart of communication between the first terminal device, the second terminal device, and the network device, and is a diagram of user plane protocol stacks of the first terminal device, the second terminal device, and the network device.

As shown in (a) in FIG. 11, the first terminal device may send a fourth TB to the network device and the second terminal device through a PUSCH. Further, the second terminal device may send third feedback information to the first terminal device through the PSFCH, and/or send fourth feedback information to the network device through the PUCCH. If the first terminal device receives the third feedback information, the first terminal device may send sixth indication information to the network device based on the third feedback information, to indicate whether the network device sends an RLC PDU included in the fourth TB to the second terminal device. If the network device receives the fourth feedback information, the network device may determine, based on the fourth feedback information, whether to send the RLC PDU included in the fourth TB to the second terminal device. If the network device determines to send the RLC PDU included in the fourth TB to the second terminal device, the network device may send a fifth TB to the second terminal device through a PDSCH.

As shown in (b) in FIG. 11, optionally, the first terminal device may send at least one PC5 PDCP PDU to the network device and the second terminal device through a Uu protocol stack. The Uu protocol stack includes a Uu RLC layer, a Uu MAC layer, and a Uu PHY. After receiving the at least one PC5 PDCP PDU, the network device forwards the at least one PC5 PDCP PDU to a downlink RLC layer through an ADAPT layer, and then sends the at least one PC5 PDCP PDU to the second terminal device through a Uu MAC layer and a Uu PHY layer.

It should be noted that the diagram of the user plane protocol stack shown in (b) in FIG. 11 is merely used as an example, and should not constitute any limitation on embodiments of this application. For example, another protocol layer may be further included between a PC5 PDCP layer and a PC5 RLC layer of the first terminal device and/or the second terminal device. One or more of a Uu ADAPT layer, a Uu PDCP layer, and a Uu SDAP layer may be further included above a Uu RLC layer of the network device. One or more of a Uu ADAPT layer, a Uu PDCP layer, and a Uu SDAP layer may be further included above the Uu RLC layer of the first terminal device and/or a Uu RLC layer of the second terminal device.

It may be understood that some optional features in embodiments of this application may be independent of other features in some scenarios, or may be combined with other features in some scenarios. This is not limited.

It may be further understood that, in some of the foregoing embodiments, sending information is mentioned for a plurality of times. For example, A sends information to B. That A sends information to B may include that A directly sends the information to B, or may include that A sends the information to B through another device or network element. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the network element may alternatively be implemented by a component (for example, a chip or a circuit) of the device. This is not limited.

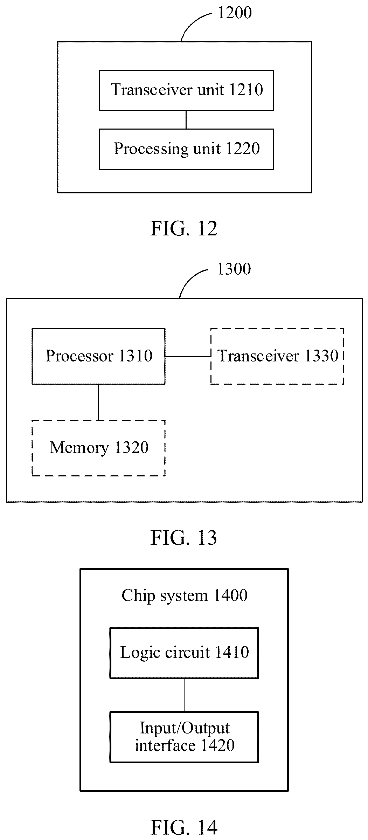

The methods provided in embodiments of this application are described in detail above with reference to FIG. 4 to FIG. 11. Apparatuses provided in embodiments of this application are described in detail below with reference to FIG. 12 to FIG. 14. It should be understood that descriptions of apparatus embodiments correspond to the descriptions of the method embodiments. Therefore, for content that is not described in detail, refer to the foregoing method embodiments. For brevity, details are not described herein again.

FIG. 12 is a diagram of a communication apparatus 1200 according to an embodiment of this application. The apparatus 1200 includes a transceiver unit 1210 and a processing unit 1220. The transceiver unit 1210 may be configured to implement a corresponding communication function. The transceiver unit 1210 may also be referred to as a communication interface or a communication unit. The processing unit 1220 may be configured to perform processing. Optionally, the transceiver unit 1210 may include a receiving unit and a sending unit. The receiving unit is configured to implement a receiving function, and the sending unit is configured to implement a sending function.

Optionally, the apparatus 1200 may further include a storage unit. The storage unit may be configured to store instructions and/or data. The processing unit 1220 may read the instructions and/or data in the storage unit, to enable the apparatus to implement the foregoing method embodiments.

In a design, the apparatus 1200 is configured to perform the step or procedure performed by the device in the foregoing method embodiments, the transceiver unit 1210 is configured to perform the sending and receiving related operations on a side of the device in the foregoing method embodiments, and the processing unit 1220 is configured to perform the processing-related operation on the side of the device in the foregoing method embodiments.

In a possible implementation, the apparatus 1200 is configured to perform the steps or procedures performed by the first terminal device in the embodiments shown in FIG. 4 to FIG. 6. Optionally, the transceiver unit 1210 is configured to send a first TB to a second terminal device on a first resource through a sidelink, where the first TB corresponds to a first RLC PDU set. The transceiver unit 1210 is further configured to: send a second TB to a network device on a second resource through an uplink; or when a first condition is met, send a second TB to a network device on a second resource through an uplink, where the second TB corresponds to the first RLC PDU set.

In another possible implementation, the apparatus 1200 is configured to perform the steps or procedures performed by the network device in the embodiments shown in FIG. 4 to FIG. 6. Optionally, the transceiver unit 1210 is configured to receive a first TB from a first terminal device on a second resource through an uplink, where both the first TB and a second TB correspond to a first RLC PDU set, and the first TB is a TB sent by the first terminal device to a second terminal device on a first resource through a sidelink. The transceiver unit 1210 is further configured to receive first information, where the first information includes second feedback information from the second terminal device and/or first indication information from the first terminal device, where the second feedback information indicates at least one of the following: a receiving status of the first TB, quality information of a channel between the first terminal device and the second terminal device, or whether the network device sends an RLC PDU included in the first RLC PDU set to the second terminal device; and the first indication information indicates whether the network device sends an RLC PDU included in the first RLC PDU set to the second terminal device. The processing unit 1220 is configured to determine, based on the first information, whether to send an RLC PDU included in the first RLC PDU set to the second terminal device.

In another possible implementation, the apparatus 1200 is configured to perform the steps or procedures performed by the second terminal device in the embodiments shown in FIG. 4 to FIG. 6. Optionally, the transceiver unit 1210 is configured to receive a first TB from a first terminal device on a first resource through a sidelink, where both the first TB and a second TB correspond to a first RLC PDU set, and the second TB is a TB that is received by a network device from the first terminal device on a second resource through an uplink. The transceiver unit 12120 is further configured to: send first feedback information to the first terminal device, and/or send second feedback information to the network device on a third resource, where the first feedback information indicates at least one of the following: a receiving status of the first TB, quality information of a channel between the first terminal device and the second terminal device, or whether the first terminal device sends the second TB to the network device; and the second feedback information indicates at least one of the following: a receiving status of the first TB, quality information of a channel between the first terminal device and the second terminal device, or whether the network device sends an RLC PDU included in the first RLC PDU set to the second terminal device.

In another possible implementation, the apparatus 1200 is configured to perform the steps or procedures performed by the first terminal device in the embodiments shown in FIG. 8 to FIG. 10. Optionally, the transceiver unit 1210 is configured to send an RNTI to a second terminal device, where the RNTI corresponds to the first terminal device, or the RNTI corresponds to the first terminal device and the second terminal device. The transceiver unit 1210 is further configured to send a fourth TB to a network device and the second terminal device on a fourth resource, where the RNTI is used by the network device and the second terminal device to decode the fourth TB.

In another possible implementation, the apparatus 1200 is configured to perform the steps or procedures performed by the network device in the embodiments shown in FIG. 8 to FIG. 10. Optionally, the transceiver unit 1210 is configured to send, to a first terminal device, an RNTI corresponding to a first terminal device and a second terminal device. The transceiver unit 1210 is further configured to receive a fourth TB from the first terminal device on a fourth resource, where the fourth resource is further used by the first terminal device to send the fourth TB to the second terminal device, and the RNTI is used by the network device and the second terminal device to decode the fourth TB.

In another possible implementation, the apparatus 1200 is configured to perform the steps or procedures performed by the second terminal device in the embodiments shown in FIG. 8 to FIG. 10. Optionally, the transceiver unit 1210 is configured to receive an RNTI from a network device or a first terminal device, where the RNTI corresponds to the first terminal device, or the RNTI corresponds to the first terminal device and the second terminal device. The transceiver unit 1210 is further configured to receive a fourth TB from the first terminal device on a fourth resource, where the fourth resource is further used by the first terminal device to send the fourth TB to the network device, and the RNTI is used by the network device and the second terminal device to decode the fourth TB.

It should be understood that a specific process in which the units perform the foregoing corresponding steps is described in detail in the foregoing method embodiments. For brevity, details are not described herein again.

It should be understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the device (for example, the terminal device or the network device) in the foregoing embodiments, and may be configured to perform the procedures and/or steps corresponding to the device in the foregoing method embodiments. To avoid repetition, details are not described herein again.

The apparatus 1200 in the foregoing solutions has functions of implementing corresponding steps performed by the device (for example, the terminal device or the network device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform the sending and receiving related operations and the related processing operation in the method embodiments.

In addition, the transceiver unit 1210 may alternatively be a transceiver circuit (for example, the transceiver circuit may include a receiver circuit and a transmitter circuit), and the processing unit may be a processing circuit.

It should be noted that the apparatus in FIG. 12 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 13 is a diagram of another communication apparatus 1300 according to an embodiment of this application. The apparatus 1300 includes a processor 1310. The processor 1310 is coupled to a memory 1320, the memory 1320 is configured to store a computer program or instructions and/or data, and the processor 1310 is configured to execute the computer program or the instructions stored in the memory 1320, or read the data stored in the memory 1320, to perform the method in the foregoing method embodiments.

Optionally, there are one or more processors 1310.

Optionally, there are one or more memories 1320.

Optionally, the memory 1320 and the processor 1310 are integrated together, or are disposed separately.

Optionally, as shown in FIG. 13, the apparatus 1300 further includes a transceiver 1330. The transceiver 1330 is configured to receive a signal and/or send a signal. For example, the processor 1310 is configured to control the transceiver 1330 to receive a signal and/or send a signal. Optionally, the transceiver 1330 may include a receiver and a transmitter. The receiver is configured to receive a signal, and the transmitter is configured to send a signal.

In an example, the processor 1310 may have a function of the processing unit 1220 shown in FIG. 12, the memory 1320 may have a function of the storage unit, and the transceiver 1330 may have a function of the transceiver unit 1210 shown in FIG. 12.

In a solution, the apparatus 1300 is configured to implement the operation performed by the device (for example, the terminal device or the network device) in the foregoing method embodiments.

For example, the processor 1310 is configured to execute the computer program or the instructions stored in the memory 1320, to implement related operations of the device (for example, the terminal device or the network device) in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

The apparatus in FIG. 13 may be the device in the foregoing embodiments, or may be a chip or a chip system, for example, a system-on-a-chip (system-on-a-chip, SoC). The transceiver may be an input/output circuit or a communication interface. The processor is a processor, a microprocessor, or an integrated circuit integrated on the chip. This is not limited herein.

It should further be noted that the memory described in this specification aims to include but is not limited to these memories and any memory of another appropriate type.

FIG. 14 is a diagram of a chip system 1400 according to an embodiment of this application. The chip system 1400 (or may be referred to as a processing system) includes a logic circuit 1410 and an input/output interface (input/output interface) 1420.

The logic circuit 1410 may be a processing circuit in the chip system 1400. The logic circuit 1410 may be coupled to a storage unit, and invoke instructions in the storage unit, so that the chip system 1400 can implement the methods and functions in embodiments of this application. The input/output interface 1420 may be an input/output circuit in the chip system 1400, and outputs information processed by the chip system 1400, or inputs to-be-processed data or signaling information to the chip system 1400 for processing.

Specifically, for example, if the chip system 1400 is installed on a terminal device, the logic circuit 1410 is coupled to the input/output interface 1420, and the input/output interface 1420 may input a TB (for example, a first TB or a third TB) to the logic circuit 1410 for processing, for example, decoding the TB. For another example, if the chip system 1400 is installed on a network device, the logic circuit 1410 is coupled to the input/output interface 1420, and the input/output interface 1420 may output a TB (for example, a third TB) to the terminal device.

In a solution, the chip system 1400 is configured to implement the operation performed by the device (for example, the terminal device or the network device) in the foregoing method embodiments.

For example, the logic circuit 1410 is configured to implement the processing-related operation performed by the device (for example, the terminal device or the network device) in the foregoing method embodiments, and the input/output interface 1420 is configured to implement the sending and/or receiving related operations/operation performed by the device (for example, the terminal device or the network device) in the foregoing method embodiments.

An embodiment of this application further provides a computer-readable storage medium. The computer-readable storage medium stores computer instructions for implementing the method performed by the device (for example, the terminal device or the network device) in the foregoing method embodiments.

For example, when a computer program is executed by a computer, the computer is enabled to implement the method performed by the device (for example, the terminal device or the network device) in the foregoing method embodiments.

An embodiment of this application further provides a computer program product, including instructions. When the instructions are executed by a computer, the method performed by the device (for example, the terminal device or the network device) in the foregoing method embodiments is implemented.

An embodiment of this application further provides a communication system. The communication system includes the terminal device (for example, the first terminal device and/or the second terminal device) and/or the network device in the foregoing embodiments. For example, the communication system includes the terminal device (for example, the first terminal device and/or the second terminal device) and/or the network device in the embodiments shown in FIG. 4 to FIG. 6 or FIG. 8 to FIG. 10.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending, by a first terminal device, a first transport block TB to a second terminal device on a first resource through a sidelink, wherein the first TB corresponds to a first radio link control RLC protocol data unit PDU set; and
sending, by the first terminal device, a second TB to a network device on a second resource through an uplink; or when a first condition is met, sending, by the first terminal device, a second TB to a network device on a second resource through an uplink, wherein the second TB corresponds to the first RLC PDU set.

2. The method according to claim 1, wherein
the first RLC PDU set comprises at least one PC5 RLC PDU.

3. The method according to claim 2, wherein the method further comprises:
sending, by the first terminal device, the at least one PC5 RLC PDU to a Uu medium access control MAC entity and a PC5 MAC entity through a PC5 RLC entity;
generating, by the first terminal device, the first TB based on the at least one PC5 RLC PDU through the PC5 MAC entity; and
generating, by the first terminal device, the second TB based on the at least one PC5 RLC PDU through the Uu MAC entity.

4. The method according to any one of claims 1 to 3, wherein
the first resource and a first logical channel set have a mapping relationship, the second resource and a second logical channel set have a mapping relationship, and the first logical channel set is associated with the second logical channel set.

5. The method according to claim 4, wherein that the first logical channel set is associated with the second logical channel set comprises:
a logical channel identifier LCID comprised in the first logical channel set is the same as an LCID comprised in the second logical channel set; or
an LCID comprised in the first logical channel set and an LCID comprised in the second logical channel set have a mapping relationship.

6. The method according to any one of claims 1 to 5, wherein the method further comprises:
receiving, by the first terminal device, first feedback information from the second terminal device, wherein the first feedback information indicates at least one of the following:
a receiving status of the first TB, quality information of a channel between the first terminal device and the second terminal device, or whether the first terminal device sends the second TB to the network device.

7. The method according to claim 6, wherein the first condition comprises at least one of the following:
the first terminal device does not correctly receive the first feedback information;
the first feedback information indicates that the second terminal device does not correctly receive the first TB;
the first feedback information indicates that quality of the channel between the first terminal device and the second terminal device is lower than a first threshold; or
the first feedback information indicates the first terminal device to send the second TB to the network device.

8. The method according to claim 6, wherein the method further comprises:
sending, by the first terminal device, first indication information to the network device based on the first feedback information, wherein the first indication information indicates whether the network device sends an RLC PDU comprised in the first RLC PDU set to the second terminal device.

9. The method according to any one of claims 1 to 8, wherein the method further comprises:
receiving, by the first terminal device, second indication information from the network device, wherein the second indication information indicates at least one of the following:
time-domain resource position information and/or frequency-domain resource position information of the first resource;
a mapping relationship between the first resource and a logical channel;
time-domain resource position information and/or frequency-domain resource position information of the second resource;
a mapping relationship between the second resource and a logical channel; or
time-domain resource position information and/or frequency-domain resource position information of a third resource, wherein the third resource is a resource used by the second terminal device to send second feedback information to the network device, and the second feedback information indicates at least one of the following: a receiving status of the first TB, quality information of a channel between the first terminal device and the second terminal device, or whether the network device sends an RLC PDU comprised in the first RLC PDU set to the second terminal device.

10. The method according to claim 9, wherein the method further comprises:
sending, by the first terminal device, fifth indication information to the second terminal device, wherein the fifth indication information indicates at least one of the following:
the time-domain resource position information and/or the frequency-domain resource position information of the first resource;
the mapping relationship between the first resource and the logical channel;
the time-domain resource position information and/or the frequency-domain resource position information of the second resource;
the mapping relationship between the second resource and the logical channel; or
the time-domain resource position information and/or the frequency-domain resource position information of the third resource.

11. The method according to any one of claims 1 to 8, wherein the method further comprises:
sending, by the first terminal device, third indication information to the network device, wherein the third indication information indicates at least one of the following:
time-domain resource position information and/or frequency-domain resource position information of the first resource;
a mapping relationship between the first resource and a logical channel;
requesting the network device to schedule the second resource and/or a third resource, wherein the third resource is a resource used by the second terminal device to send second feedback information to the network device, and the second feedback information indicates at least one of the following: a receiving status of the first TB, quality information of a channel between the first terminal device and the second terminal device, or whether the network device sends an RLC PDU comprised in the first RLC PDU set to the second terminal device.

12. A data transmission method, comprising:
receiving, by a network device, a second transport block TB from a first terminal device on a second resource through an uplink, wherein both the second TB and a first TB correspond to a first radio link control RLC protocol data unit PDU set, and the first TB is a TB sent by the first terminal device to a second terminal device on a first resource through a sidelink;
receiving, by the network device, first information, wherein the first information comprises second feedback information from the second terminal device and/or first indication information from the first terminal device; the second feedback information indicates at least one of the following: a receiving status of the first TB, quality information of a channel between the first terminal device and the second terminal device, or whether the network device sends an RLC PDU comprised in the first RLC PDU set to the second terminal device; and the first indication information indicates whether the network device sends an RLC PDU comprised in the first RLC PDU set to the second terminal device; and
determining, by the network device based on the first information, whether to send an RLC PDU comprised in the first RLC PDU set to the second terminal device.

13. The method according to claim 12, wherein
the first resource and a first logical channel set have a mapping relationship, the second resource and a second logical channel set have a mapping relationship, and the first logical channel set is associated with the second logical channel set.

14. The method according to claim 13, wherein that the first logical channel set is associated with the second logical channel set comprises:
a logical channel identifier LCID comprised in the first logical channel set is the same as an LCID comprised in the second logical channel set; or
an LCID comprised in the first logical channel set and an LCID comprised in the second logical channel set have a mapping relationship.

15. The method according to any one of claims 12 to 14, wherein determining, by the network device based on the first information, whether to send the RLC PDU comprised in the first RLC PDU set to the second terminal device comprises:
sending, by the network device when a second condition is met, an RLC PDU comprised in the first RLC PDU set to the second terminal device, wherein the second condition comprises at least one of the following:
the first information comprises the second feedback information, and the second feedback information indicates that the second terminal device does not correctly receive the first TB;
the first information comprises the second feedback information, and the second feedback information indicates that quality of the channel between the first terminal device and the second terminal device is lower than a first threshold;
the first information comprises the second feedback information, and the second feedback information indicates the network device to send an RLC PDU comprised in the first RLC PDU set to the second terminal device; and
the first information comprises the first indication information, and the first indication information indicates the network device to send an RLC PDU comprised in the first RLC PDU set to the second terminal device.

16. The method according to claim 15, wherein sending, by the network device when the second condition is met, the RLC PDU comprised in the first RLC PDU set to the second terminal device comprises:
sending, by the network device when the second condition and a third condition are met, an RLC PDU comprised in the first RLC PDU set to the second terminal device, wherein the third condition is that at least one time-domain unit comprised in a first time-domain resource is before all time-domain units comprised in a second time-domain resource, the first time-domain resource is used by the network device to send an RLC PDU comprised in the first RLC PDU set to the second terminal device, and the second time-domain resource is used by the first terminal device to retransmit an RLC PDU comprised in the first RLC PDU set.

17. The method according to any one of claims 12 to 16, wherein the method further comprises:
sending, by the network device, second indication information to the first terminal device, wherein the second indication information indicates at least one of the following:
time-domain resource position information and/or frequency-domain resource position information of the first resource;
a mapping relationship between the first resource and a logical channel;
time-domain resource position information and/or frequency-domain resource position information of the second resource;
a mapping relationship between the second resource and a logical channel; or
time-domain resource position information and/or frequency-domain resource position information of a third resource, wherein the third resource is a resource used by the second terminal device to send the second feedback information to the network device.

18. The method according to any one of claims 12 to 16, wherein the method further comprises:
receiving, by the network device, third indication information from the first terminal device, wherein the third indication information indicates at least one of the following: time-domain resource position information and/or frequency-domain resource position information of the first resource; a mapping relationship between the first resource and a logical channel; or requesting the network device to schedule the second resource and/or a third resource, wherein the third resource is a resource used by the second terminal device to send the second feedback information to the network device; and
sending, by the network device, fourth indication information to the first terminal device based on the third indication information, wherein the fourth indication information indicates at least one of the following:
time-domain resource position information and/or frequency-domain resource position information of the second resource;
a mapping relationship between the first resource and a logical channel; or
time-domain resource position information and/or frequency-domain resource position information of the third resource.

19. The method according to any one of claims 12 to 18, wherein the method further comprises:
sending, by the network device, fifth indication information to the second terminal device, wherein the fifth indication information indicates at least one of the following:
time-domain resource position information and/or frequency-domain resource position information of the first resource;
a mapping relationship between the first resource and a logical channel;
time-domain resource position information and/or frequency-domain resource position information of the second resource;
a mapping relationship between the second resource and a logical channel; or
time-domain resource position information and/or frequency-domain resource position information of a third resource, wherein the third resource is a resource used by the second terminal device to send the second feedback information to the network device.

20. A data transmission method, comprising:
receiving, by a second terminal device, a first transport block TB from a first terminal device on a first resource through a sidelink, wherein both the first TB and a second TB correspond to a first radio link control RLC protocol data unit PDU set, and the second TB is a TB that is received by a network device from the first terminal device on a second resource through an uplink; and
sending, by the second terminal device, first feedback information to the first terminal device, and/or sending, by the second terminal device, second feedback information to the network device on a third resource, wherein the first feedback information indicates at least one of the following: a receiving status of the first TB, quality information of a channel between the first terminal device and the second terminal device, or whether the first terminal device sends the second TB to the network device; and the second feedback information indicates at least one of the following: a receiving status of the first TB, quality information of a channel between the first terminal device and the second terminal device, or whether the network device sends an RLC PDU comprised in the first RLC PDU set to the second terminal device.

21. The method according to claim 20, wherein the method further comprises:
receiving, by the second terminal device, a third TB from the network device, wherein the third TB corresponds to the first RLC PDU set.

22. The method according to claim 21, wherein the method further comprises:
sending, by the second terminal device, an RLC PDU comprised in the first RLC PDU set to a PC5 RLC entity through a Uu medium access control MAC entity.

23. The method according to any one of claims 20 to 22, wherein
the first resource and a first logical channel set have a mapping relationship, the second resource and a second logical channel set have a mapping relationship, and the first logical channel set is associated with the second logical channel set.

24. The method according to claim 23, wherein that the first logical channel set is associated with the second logical channel set comprises:
a logical channel identifier LCID comprised in the first logical channel set is the same as an LCID comprised in the second logical channel set; or
an LCID comprised in the first logical channel set and an LCID comprised in the second logical channel set have a mapping relationship.

25. The method according to any one of claims 20 to 24, wherein the method further comprises:
receiving, by the second terminal device, fifth indication information from the network device or the first terminal device, wherein the fifth indication information indicates at least one of the following:
time-domain resource position information and/or frequency-domain resource position information of the first resource;
a mapping relationship between the first resource and a logical channel;
time-domain resource position information and/or frequency-domain resource position information of the second resource;
a mapping relationship between the second resource and a logical channel; or
time-domain resource position information and/or frequency-domain resource position information of the third resource.

26. A communication apparatus, comprising a PC5 radio link control RLC entity, a Uu medium access control MAC entity, and a PC5 MAC entity, wherein
the PC5 RLC entity is configured to send at least one PC5 RLC protocol data unit PDU to the Uu MAC entity and the PC5 MAC entity;
the PC5 MAC entity is configured to generate a first transport block TB based on the at least one PC5 RLC PDU; and
the Uu MAC entity is configured to generate a second TB based on the at least one PC5 RLC PDU.

27. The communication apparatus according to claim 26, wherein the communication apparatus further comprises one or more of the following entities: a PC5 service data adaptation protocol SDAP entity, a PC5 packet data convergence protocol PDCP entity, a PC5 physical PHY entity, a Uu SDAP entity, a Uu PDCP entity, a Uu RLC entity, or a Uu PHY entity.

28. A communication apparatus, comprising a Uu medium access control MAC entity and a PC5 radio link control RLC entity, wherein
the Uu MAC entity is configured to receive a third transport block TB from a network device, wherein the third TB corresponds to a first RLC protocol data unit PDU set; and
the Uu MAC entity is further configured to send an RLC PDU comprised in the first RLC PDU set to the PC5 RLC entity.

29. A communication apparatus, comprising a module or a unit for performing the method according to any one of claims 1 to 11, comprising a module or a unit for performing the method according to any one of claims 12 to 19, or comprising a module or a unit for performing the method according to any one of claims 20 to 25.

30. A communication apparatus, comprising a processor, wherein the processor is configured to execute a computer program or instructions stored in a memory, to enable the communication apparatus to perform the method according to any one of claims 1 to 11, to enable the communication apparatus to perform a module or a unit of the method according to any one of claims 12 to 19, or to enable the communication apparatus to perform a module or a unit of the method according to any one of claims 20 to 25.

31. The communication apparatus according to claim 30, wherein the communication apparatus further comprises the memory and/or a communication interface, and the communication interface is coupled to the processor; and
the communication interface is configured to: input and/or output information.

32. A computer-readable storage medium, wherein the computer-readable storage medium stores a computer program or instructions; and when the computer program or the instructions are run on a communication apparatus, the communication apparatus is enabled to perform the method according to any one of claims 1 to 11, the communication apparatus is enabled to perform the method according to any one of claims 12 to 19, or the communication apparatus is enabled to perform the method according to any one of claims 20 to 25.

33. A computer program product, wherein the computer program product comprises a computer program or instructions for performing the method according to any one of claims 1 to 11, comprises a computer program or instructions for performing the method according to any one of claims 12 to 19, or comprises a computer program or instructions for performing the method according to any one of claims 20 to 25.

34. A chip, wherein the chip is coupled to a memory, and is configured to read and execute program instructions stored in the memory, to implement the method according to any one of claims 1 to 11, implement the method according to any one of claims 12 to 19, or implement the method according to any one of claims 20 to 25.
